(19) Europäisches Patentamt
European Patent Office
Office européen des brevets

(11) EP 1 164 391 B1

(12) # EUROPEAN PATENT SPECIFICATION

(45) Date of publication and mention of the grant of the patent:
**14.12.2011 Bulletin 2011/50**

(21) Application number: **00906642.4**

(22) Date of filing: **02.03.2000**

(51) Int Cl.:
***G02B 5/30*** *(2006.01)* ***G02F 1/13363*** *(2006.01)*

(86) International application number:
**PCT/JP2000/001245**

(87) International publication number:
**WO 2000/055657 (21.09.2000 Gazette 2000/38)**

(54) **ELLIPTIC POLARIZER FORMED OF TRANSPARENT PROTECTIVE LAYER, POLARIZER LAYER, TRANSPARENT SUPPORT AND OPTICAL ANISOTROPIC LAYER OF LIQUID-CRYSTAL MOLECULES**

ELLIPTISCH POLARISIERENDE TRANSPARENTE SCHUTZSCHICHT, POLARISATIONSSCHICHT, TRANSPARENTER TRÄGER UND OPTISCH ANISOTROPE SCHICHT AUS FLÜSSIGKRISTALLMOLEKÜLEN

POLARISEUR ELLIPTIQUE FORME D'UNE COUCHE PROTECTRICE TRANSPARENTE, D'UNE COUCHE POLARISANTE, D'UN SUPPORT TRANSPARENT ET D'UNE COUCHE ANISOTROPE OPTIQUE DE MOLECULES DE CRISTAUX LIQUIDES

(84) Designated Contracting States:
**AT BE CH CY DE DK ES FI FR GB GR IE IT LI LU MC NL PT SE**
Designated Extension States:
**AL LT LV MK RO SI**

(30) Priority: **12.03.1999 JP 6672399**

(43) Date of publication of application:
**19.12.2001 Bulletin 2001/51**

(73) Proprietor: **FUJIFILM Corporation**
**Minato-ku**
**Tokyo (JP)**

(72) Inventor: **MORI, Hiroyuki,**
**Fuji Photo Film Co. Ltd.**
**Minami-ashigara-shi,**
**Kanagawa 250-0123 (JP)**

(74) Representative: **HOFFMANN EITLE**
**Patent- und Rechtsanwälte**
**Arabellastraße 4**
**81925 München (DE)**

(56) References cited:

| | |
|---|---|
| **EP-A- 0 774 683** | **EP-A- 0 864 906** |
| **EP-A- 0 911 656** | **EP-A- 0 928 984** |
| **EP-A- 1 156 349** | **EP-A2- 0 926 533** |
| **JP-A- 7 218 724** | **JP-A- 9 230 334** |
| **JP-A- 9 230 335** | **JP-A- 2000 111 914** |
| **US-A- 5 583 679** | **US-A- 5 667 854** |

- **PATENT ABSTRACTS OF JAPAN vol. 1998, no. 01, 30 January 1998 (1998-01-30) & JP 9 230334 A (FUJI PHOTO FILM CO LTD), 5 September 1997 (1997-09-05) -& DATABASE WPI Section PQ, Week 199746 Derwent Publications Ltd., London, GB; Class P81, AN 1997-493975 XP002311129 -& JP 09 230334 A (FUJI PHOTO FILM CO LTD) 5 September 1997 (1997-09-05)**

Remarks:
A request for correction of the English translation has been filed pursuant to Rule 88 EPC. A decision on the request will be taken during the proceedings before the Examining Division.

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 164 391 B1

## Description

[Technical field]

The present invention relates to an ellipsoidal polarizing plate comprising a transparent protective membrane, a polarizing membrane, a transparent support and an optically anisotropic layer formed from liquid crystal molecules in this order.

[Prior art]

A liquid crystal display comprises a liquid crystal cell, a polarizing element and an optical compensatory sheet (phase retarder). In a display of transmission type, two polarizing elements are provided on both sides of the liquid crystal cell, and one or two optical compensatory sheets are placed between the liquid crystal cell and the polarizing element. A display of reflection type comprises a reflection plate, a liquid crystal cell, an optical compensatory sheet and a polarizing element in this order.
The liquid crystal cell comprises a pair of substrates, rod-like liquid crystal molecules and an electrode layer. The rod-like liquid crystal molecules are placed and sealed between the substrates. The electrode layer has a function of applying a voltage to the rod-like liquid crystal molecule. The liquid crystal cells can be classified into various display modes according to alignment of the rod-like liquid crystal molecules in the cell. Examples of the display modes for transmission type include TN (twisted nematic) mode, IPS (in-plane switching) mode, FLC (ferroelectric liquid crystal) mode, OCB (optically compensatory bend) mode, STN (super twisted nematic) mode and VA (vertically aligned) mode. Examples of the modes for reflection type include TN mode and HAN (hybrid aligned nematic) mode.
The polarizing element usually comprises a polarizing membrane and two transparent protective films arranged on both sides of the polarizing membrane.
The optical compensatory sheet is used in various liquid crystal displays to prevent the displayed image from undesirable coloring and to en-large a viewing angle of a liquid crystal cell. A birefringent polymer film has been used as the optical compensatory sheet.
Another optical compensatory sheet has recently been proposed in place of the conventional sheet consisting of the birefringent polymer film. The new optical compensatory sheet comprises a transparent support and an optically anisotropic layer formed from liquid crystal molecules (particularly discotic liquid crystal molecules). The optically anisotropic layer is formed by orienting the liquid crystal molecules, and fixing alignment of the molecules. The alignment is usually fixed by using liquid crystal molecules having a polymerizable group and causing a polymerization reaction. Since the liquid crystal molecules (particularly discotic liquid crystal molecules) have various alignment forms, the liquid crystal molecules can arrange a specific optical characteristic of an optical compensatory sheet, which corresponds to one of various display modes of the liquid crystal cell.
Various optical compensatory sheets corresponding to various display modes have been proposed by using discotic liquid crystal molecules. For example, Japanese Patent Provisional Publication No. 6(1994)-214116, US Patent Nos. 5,583,679, 5,646,703 and German Patent No. 3,922,620A1 disclose optical compensatory sheet for a liquid crystal cell of TN mode. Further, Japanese Patent Provisional Publication No. 10(1998)-54982 discloses an optical compensatory sheet for a liquid crystal cell of an IPS mode or a FLC mode. Furthermore, US Patent No. 5,805,253 and International Patent No. WO96/37804 disclose optical compensatory sheets for a liquid crystal cell of an OCB mode or an HAN mode. Still furthermore, Japanese Patent Provisional Publication No. 9(1997)-26572 discloses an optical compensatory sheet for a liquid crystal cell of an STN mode. Moreover, Japanese Patent No. 2,866,372 discloses an optical compensatory sheet for a liquid crystal cell of a VA mode.
The optically compensatory sheet using liquid crystal molecules can be laminated on a polarizing element to form an ellipsoidal polarizing plate, in which the transparent support of the optically compensatory sheet can function as one of two transparent protective films of the polarizing element. The above-mentioned ellipsoidal polarizing plate comprises a transparent protective membrane, a polarizing membrane, a transparent support and an optically anisotropic layer formed from liquid crystal molecules in this order. Since a liquid crystal display has advantages of thin thickness and light weight, it is more advantageous to reduce number of elements because of a combined use to further decrease the thickness and weight. In the preparation of liquid crystal display, the number of steps of adhering elements can be reduced by reducing number of elements to decrease possibility of causing a problem at the steps of adhering the elements. Japanese Patent Provisional Publication Nos. 7(1995)-191217, 8(1996)-21996 and 8(1996)-94838 disclose a combined ellipsoidal polarizing plate in which a transparent support of an optical compensatory sheet using liquid crystal molecules also functions as one of two protective films of a polarizing element.
EP-A-0 864 906 discloses a liquid crystal display which comprises in order a polarising element, an optical compensation sheet which may be formed from a transparent substrate and an optically anisotropic layer, a liquid crystal cell of vertical alignment mode, a further optical compensatory sheet again which may be formed from a transparent

substrate and an optically anisotropic layer, and finally a second polarising element.

US-A-5 583 679 teaches an optical compensatory sheet which comprises a transparent support and an optically anisotropic layer. The liquid crystal display includes a liquid crystal cell sandwiched between two optical compensatory sheets which are in turn sandwiched between two polarising plates.

[Summary of the invention]

US Patent No. 5,646,703 proposes an optically anisotropic transparent support of an optical compensatory sheet to optically compensate a liquid crystal cell in combination with optical anisotropy of an optically anisotropic layer. A stretched synthetic polymer film is used as the optically anisotropic support.

On the other hand, a cellulose ester film has been used as a transparent protective film.

The stretched synthetic polymer film, which has been used as the optically anisotropic transparent support is inferior to the cellulose ester film in the function of protecting a polarizing membrane. In the case that a synthetic polymer film is used as an optically anisotropic transparent support of a combined ellipsoidal polarizing plate, two protective films of a polarizing membrane are different from each other because a cellulose ester film is used as the other transparent protective film. The different two protective films may cause a problem (such as deformation cased by difference in temperature-dependent shrinkage factor). Further, it is rather difficult to adhere a stretched synthetic polymer film to a polarizing membrane.

An object of the present invention is to provide a combined ellipsoidal polarizing plate using an optically anisotropic transparent support that is excellent in a function of protecting a polarizing membrane.

Another object of the invention is to provide a combined ellipsoidal polarizing plate in which two polymer films having analogous physical properties are used as a transparent protective film and an optically anisotropic transparent support.

A further object of the invention is to provide a combined ellipsoidal polarizing plate improved in mechanical strength.

A furthermore object of the invention is to provide a liquid crystal display using an improved combined ellipsoidal polarizing plate.

According to a first aspect, the present invention provides an ellipsoidal polarizing plate as defined in claim 1.

It is preferred that the cellulose ester film is obtainable by solvent casting a solution of cellulose ester formed by the cooling dissolution method in which a mixture of an organic solvent and 10 to 40 wt% of cellulose ester, based on the mixture, is cooled to a temperature of -100 to - 10°C to solidify it and then the solidified mixture is warmed to a temperature of 0 to 200°C to dissolve the cellulose ester in the solvent.

According to a second aspect, the invention provides a liquid crystal display of transmission type comprising a liquid crystal cell and two polarizing elements provided on both sides of the cell, wherein at least one of the two polarizing elements is an ellipsoidal polarizing plate according to the above first aspect.

The present inventor has studied a cellulose ester film and succeeded in preparing a cellulose ester film having an Rth retardation value (a retardation value along a thickness direction) in the range of 70 to 400 nm. The cellulose ester film having such a high optical anisotropy can advantageously used as an optically anisotropic transparent support of a combined ellipsoidal polarizing plate.

The cellulose ester film is superior to a stretched synthetic polymer film, which has been used as an optically anisotropic transparent support in the function of protecting a polarizing membrane. Further, the optically anisotropic support can be made of a cellulose ester film, which is analogous to a cellulose ester film, which has been used as a transparent protective film. Therefore, the problem caused by the difference in the physical properties between the transparent support and the protective film (such as deformation cased by difference in temperature-dependent shrinkage factor) is now solved by using the optically anisotropic cellulose ester film as the support according to the present invention. Furthermore, the cellulose ester film is superior to the stretched synthetic polymer film in adhering the film to a polarizing membrane.

The mechanical strength of the ellipsoidal polarizing plate can be further improved by subjecting the surface of the cellulose ester film facing the polarizing membrane to a corona discharge treatment, a glow discharge treatment, a flame treatment, an acid treatment, an alkali treatment or an ultraviolet irradiation treatment. The surface treatment can improve the adhesion in the ellipsoidal polarizing plate without affecting the optical function of the ellipsoidal polarizing plate. The ellipsoidal polarizing plate improved in the mechanical strength according to the present invention has another advantage that the ellipsoidal polarizing plate can be easily handled.

[Brief description of the drawings]

Fig. 1 is a schematic view illustrating a basic structure of a liquid crystal display of transmission type.
Fig. 2 is a schematic view illustrating a basic structure of a liquid crystal display of reflective type.

[Detailed description of the invention]

(Structure of liquid crystal display)

Fig. 1 is a schematic view illustrating a basic structure of a liquid crystal display of transmission type.
The liquid crystal display of transmission type shown in (a) of Fig. 1 comprises a backlight (BL), a transparent protective film (1a), a polarizing membrane (2a), a transparent support (3a), an optically anisotropic layer (4a), a lower substrate of a liquid crystal cell (5a), a rod-like liquid crystal layer (6), an upper substrate of a liquid crystal cell (5b), an optically anisotropic layer (4b), a transparent support (3b), a polarizing membrane (2b) and a transparent protective film (1b) in this order. One ellipsoidal polarizing plate comprises the transparent protective film (1a), the polarizing membrane (2a), the transparent support (3a) and the optically anisotropic layer (4a).
The other ellipsoidal polarizing plate comprises the optically anisotropic layer (4b), the transparent support (3b), the polarizing membrane (2b) and the transparent protective film (1b).
The liquid crystal display of transmission type shown in (b) of Fig. 1 comprises a backlight (BL), a transparent protective film (1a), a polarizing membrane (2a), a transparent support (3a), an optically anisotropic layer (4a), a lower substrate of a liquid crystal cell (5a), a rod-like liquid crystal layer (6), an upper substrate of a liquid crystal cell (5b), a transparent protective film (1b), a polarizing membrane (2b) and a transparent protective film (1c) in this order. An ellipsoidal polarizing plate comprises the transparent protective film (1a), the polarizing membrane (2a), the transparent support (3a) and the optically anisotropic layer (4a).
The liquid crystal display of transmission type shown in (c) of Fig. 1 comprises a backlight (BL), a transparent protective film (1a), a polarizing membrane (2a), a transparent protective film (1b), a lower substrate of a liquid crystal cell (5a), a rod-like liquid crystal layer (6), an upper substrate of a liquid crystal cell (5b), an optically anisotropic layer (4b), a transparent support (3b), a polarizing membrane (2b) and a transparent protective film (1c) in this order. An ellipsoidal polarizing plate comprises the optically anisotropic layer (4b), the transparent support (3b), the polarizing membrane (2b) and the transparent protective film (1c).
Fig. 2 is a schematic view illustrating a basic structure of a liquid crystal display of reflective type.
The liquid crystal display of reflective type shown in Fig. 2 comprises a reflective plate (RP), a lower substrate of a liquid crystal cell (5a), a rod-like liquid crystal layer (6), an upper substrate of a liquid crystal cell (5b), an optically anisotropic layer (4b), a transparent support (3b), a polarizing membrane (2b) and a transparent protective film (1b) in this order. An ellipsoidal polarizing plate comprises the optically anisotropic layer (4b), the transparent support (3b), the polarizing membrane (2b) and the transparent protective film (1b).

(Transparent protective film)

The transparent protective film is made of a transparent polymer film. The term "transparent" means that light transmittance is 80% or more.
The transparent protective film is usually made of a cellulose ester film, and is preferably made of cellulose triacetate film. The cellulose ester film is preferably prepared according to a solvent casting method.
The transparent protective film has a thickness preferably in the range of 20 to 500 μm, and more preferably in the range of 50 to 200 μm.

(Polarizing membrane)

The polarizing membranes include an iodine polarizing membrane, a dye polarizing membrane using a dichromatic dye and a polyene polarizing membrane and a polarizing membrane. The iodine polarizing membrane and the dye polarizing membrane are generally made of polyvinyl alcohol films. The transmission axis of the polarizing membrane is perpendicular to the stretched direction of the film.

(Transparent support)

The transparent support has a thickness preferably in the range of 20 to 500 μm, and more preferably in the range of 50 to 200 μm.
In the present invention, a cellulose ester film having an Rth retardation value in the range of 70 to 400 nm is used as the transparent support.
The Rth retardation value measured at the wavelength of 550 nm ($Rth^{550}$) is adjusted within the range of 70

to 400 nm according to the present invention. The Rth retardation value is preferably in the range of 70 to 350 nm, more preferably in the range of 75 to 300 nm, further preferably in the range of 75 to 200 nm, furthermore preferably in the range of 75 to 150 nm, and most preferably in the range of 75 to 100 nm.

The birefringence along the thickness direction {(nx+ny)/2-nx} is preferably in the range of $7\times10^{-4}$ to $4\times10^{-3}$, more preferably in the range of $7\times10^{-4}$ to $3.5\times10^{-3}$, further preferably in the range of $7.5\times10^{-4}$ to $3\times10^{-3}$, furthermore preferably in the range of $7.5\times10^{-4}$ to $2\times10^{-3}$, still furthermore preferably in the range of $7.5\times10^{-4}$ to $1.5\times10^{-3}$, and most preferably in the range of $7.5\times10^{-4}$ to $1\times10^{-3}$.

An Re retardation value (a retardation value in plane) of a cellulose ester film can be increased by stretching the cellulose ester film. An Rth retardation value (a retardation value along a thickness direction) of the cellulose ester film can be increased by (1) using a retardation-increasing agent, (2) adjusting an acetic acid content (acetic substitution degree) of cellulose ester , or (3) a specific film forming method according to a cooling dissolution method. Therefore, a cellulose ester film, which has been considered optical isotropic, is now used as an optical anisotropic film having an optically compensatory function.

The cellulose ester film having a high retardation value can be prepared, as is described below.

Cellulose ester preferably is an ester of a lower fatty acid with cellulose. The lower fatty acid means an aliphatic carboxylic acid having 1 to 6 carbon atoms. The number of carbon atoms preferably is 2 (cellulose acetate), 3 (cellulose propionate) or 4 (cellulose butyrate). Cellulose acetate is particularly preferred. A cellulose ester of two or more fatty acids such as cellulose acetate propionate or cellulose acetate butyrate can also be used in the preparation of the film.

Cellulose acetate preferably has an acetic acid content in the range of 55.0 to 62.5%. A film having a high retardation value can easily be prepared by using cellulose acetate having an acetic acid content in the range of 55.0 to 58.0% (preferably 57.0 to 58.0%). On the other hand, the acetic acid content is preferably in the range of 58.0 to 62.5% in view of the physical properties of the film. A film having a high retardation value can also be prepared from cellulose acetate having an acetic acid content in the range of 58.0 to 62.5% by using a retardation-increasing agent (described below).

An aromatic compound having at least two aromatic rings can be used as a retardation-increasing agent. The amount of the retardation-increasing agent is in the range of 0.3 to 20 weight parts based on 100 weight parts of cellulose ester. Two or more retardation increasing agents can be used in combination. The retardation-increasing agent preferably has a molecular structure that does not cause a steric hindrance of the configuration between the two aromatic rings.

The compound having at least two aromatic rings has a plane of a $\pi$ bond of at least seven carbon atoms. The two aromatic rings can form one aromatic plane where the molecular structure does not cause a steric hindrance of the configuration between the two aromatic rings. According to study of the present inventor, one aromatic plane is preferably formed by two or more aromatic rings to increase a retardation value of a cellulose ester film.

In the present specification, the term "aromatic ring" means an aromatic heterocyclic ring as well as an aromatic hydrocarbon ring. The aromatic hydrocarbon ring preferably is six-membered ring (namely benzene ring).

The aromatic heterocyclic ring usually is an unsaturated heterocyclic ring. The aromatic heterocyclic ring preferably is a five-membered or six-membered ring. The aromatic heterocyclic ring usually has the maximum number of double bonds. The hetero-atom preferably is nitrogen, oxygen or sulfur, and most preferably is nitrogen. Examples of the aromatic heterocyclic rings include furan ring, thiophene ring, pyrrole ring, oxazole ring, isoxazole ring, thiazole ring, isothiazole ring, imidazole ring, pyrazole ring, furazan ring, triazole ring, pyran ring, pyridine ring, pyridazine ring, pyrimidine ring, pyrazine ring and 1,3,5-triazine ring.

The aromatic ring preferably is benzene ring, furan ring, thiophene ring, pyrrole ring, oxazole ring, thiazole ring, imidazole ring, triazole ring, pyridine ring, pyrimidine ring, pyrazine ring or 1,3,5-triazine ring.

The number of the aromatic rings contained in the retardation-increasing agent is preferably in the range of 2 to 20, more preferably in the range of 2 to 12, further preferably in the range of 2 to 8, and most preferably in the range of 2 to 6. Where three or more aromatic rings are contained in the retardation-increasing agent, the molecular structure preferably does not cause a steric hindrance of the configuration between at least two aromatic rings.

The two aromatic rings can be combined by (a) ring condensation, (b) a direct single bond, or (c) a linking group (no spiro bond can be formed because the rings are aromatic). Each of the bonds (a) to (c) is effective in view of the function of increasing retardation. In the case of (b) or (c), the molecular structure preferably does not cause a steric hindrance of the configuration between the two aromatic rings.

Examples of (a) the condensed rings (consisting of two or more aromatic rings) include indene ring, naphthalene ring, azulene ring, fluorene ring, phenanthrene ring, anthracene ring, acenaphthylene ring, biphenylene ring, naphthacene ring, pyrene ring, indole ring, isoindole ring, benzofuran ring, benzothiophene ring, indolizine ring, benzoxazole ring, benzothiazole ring, benzimidazole ring, benzotriazole ring, purine ring, indazole ring, chromene ring, quinoline ring, isoquinoline ring, quinolizine ring, quinazoline ring, cinnoline ring, quinoxaline ring, phthalazine ring, pteridine ring, carbazole ring, acridine ring, phenanthridine ring, xanthene ring, phenazine ring, phenothiazine ring, phenoxathiin ring, phenoxazine ring and thianthrene ring. Naphthalene ring, azulene ring, indole ring, benzoxazole ring, benzothiazole ring, benzimidazole ring, benzotriazole ring and quinoline ring are preferred.

The single bond of (b) is preferably attached to carbon atoms of the two aromatic rings. Two or more single bonds can be formed between the two aromatic rings to form an aliphatic or non-aromatic heterocyclic ring between the two aromatic rings.

The linking group of (c) is also preferably attached to carbon atoms of the two aromatic rings. The linking group preferably is an alkylene group, an alkenylene group, an alkynylene group, -CO-, -O-, -NH-, -S- or a combination thereof. Examples of the combined linking groups are shown below. In the following examples, the right and left sides are reversible.

c1: -CO-O-
c2: -CO-NH-
c3: -alkylene-O-
c4: -NH-CO-NH-
c5: -NH-CO-O-
c6: -O-CO-O-
c7: -O-alkylene-O-
c8: -CO-alkenylene-
c9: -CO-alkenylene-NH-
c10: -CO-alkenylene-O-
c11: -alkylene-CO-O-alkylene-O-CO-alkylene-
c12: -O-alkylene-CO-O-alkylene-O-CO-alkylene-O-
c13: -O-CO-alkylene-CO-O-
c14: -NH-CO-alkenylene-
c15: -O-CO-alkenylene-

The aromatic ring and the linking group can have a substituent group provided that the substituent group does not cause a steric hindrance of the configuration between the two aromatic rings. The steric hindrance is caused based on the nature and position of the substituent group. A steric bulky group (for example, a tertiary alkyl group) tends to cause the steric hindrance. If a substituent group is attached to a position next to the position of a link (ortho position in benzene ring), the substituent group tends to cause the steric hindrance.

Examples of the substituent groups include a halogen atom (F, C1, Br, I), hydroxyl, carboxyl, cyano, amino, nitro, sulfo, carbamoyl, sulfamoyl, ureido, an alkyl group, an alkenyl group, an alkynyl group, an aliphatic acyl group, an aliphatic acyloxy group, an alkoxy group, an alkoxycarbonyl group, an alkoxycarbonylamino group, an alkylthio group, an alkylsulfonyl group, an aliphatic amido group, an aliphatic sulfonamido group, an aliphatic substituted amino group, an aliphatic substituted carbamoyl group, an aliphatic substituted sulfamoyl group, an aliphatic substituted ureido group and a non-aromatic heterocyclic group.

The alkyl group preferably has 1 to 8 carbon atoms. The alkyl group preferably has a chain structure rather than a cyclic structure. A linear chain structure is particularly preferred. The alkyl group may further have a substituent group (e.g., hydroxyl, carboxyl, an alkoxy group, an alkylamino group). Examples of the alkyl groups (including the substituted alkyl groups) include methyl, ethyl, n-butyl, n-hexyl, 2-hydroxyethyl, 4-carboxybutyl, 2-methoxyethyl and 2-diethylaminoethyl.

The alkenyl group preferably has 2 to 8 carbon atoms. The alkenyl group preferably has a chain structure rather than a cyclic structure. A linear chain structure is particularly preferred. The alkenyl group may further have a substituent group. Examples of the alkenyl groups include vinyl, allyl and 1-hexenyl.

The alkynyl group preferably has 2 to 8 carbon atoms. The alkynyl group preferably has a chain structure rather than a cyclic structure. A linear chain structure is particularly preferred. The alkynyl group may further have a substituent group. Examples of the alkynyl groups include ethynyl, 1-butynyl and 1-hexynyl.

The aliphatic acyl group preferably has 1 to 10 carbon atoms. Examples of the aliphatic acyl groups include acetyl, propanoyl and butanoyl.

The aliphatic acyloxy group preferably has 1 to 10 carbon atoms. Examples of the aliphatic acyloxy groups include acetoxy.

The alkoxy group preferably has 1 to 8 carbon atoms. The alkoxy group may have a substituent group (e.g., an alkoxy group). Examples of the alkoxy groups (including the substituted alkoxy groups) include methoxy, ethoxy, butoxy and methoxyethoxy.

The alkoxycarbonyl group preferably has 2 to 10 carbon atoms. Examples of the alkoxycarbonyl groups include methoxycarbonyl and ethoxycarbonyl.

The alkoxycarbonylamino group preferably has 2 to 10 carbon atoms. Examples of the alkoxycarbonylamino groups include methoxycarbonylamino and ethoxycarbonylamino.

The alkylthio group preferably has 1 to 12 carbon atoms. Examples of the alkylthio groups include methylthio,

ethylthio and octylthio.

The alkylsulfonyl group preferably has 1 to 8 carbon atoms. Examples of the alkylsulfonyl groups include methanesulfonyl and ethanesulfonyl.

The aliphatic amido group preferably has 1 to 10 carbon atoms. Examples of the aliphatic amido groups include acetamido.

The aliphatic sulfonamido group preferably has 1 to 8 carbon atoms. Examples of the aliphatic sulfonamido groups include methanesulfonamido, butanesulfonamido and n-octanesulfonamido.

The aliphatic substituted amino group preferably has 1 to 10 carbon atoms. Examples of the aliphatic substituted amino groups include dimethylamino, diethylamino and 2-carboxyethylamino.

The aliphatic substituted carbamoyl group preferably has 2 to 10 carbon atoms. Examples of the aliphatic substituted carbamoyl groups include methylcarbamoyl and ethylcarbamoyl.

The aliphatic substituted sulfamoyl group preferably has 1 to 8 carbon atoms. Examples of the aliphatic substituted sulfamoyl groups include methylsulfamoyl and ethylsulfamoyl.

The aliphatic substituted ureido group preferably has 2 to 10 carbon atoms. Examples of the aliphatic substituted ureido groups include methylureido.

Examples of the non-aromatic heterocyclic groups include piperidino and morpholino.

The retardation-increasing agent has a molecular weight preferably in the range of 300 to 800. The retardation-increasing agent preferably has a boiling point of not lower than 260°C. The boiling point can be measured by using a commercially available machine (for example, TG/DTA100, Seiko Instruments Inc.).

Examples of the retardation-increasing agents are shown below. In the following examples, the aromaticity of a ring is represented by a circle.

(1)

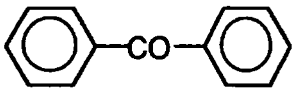

(2)

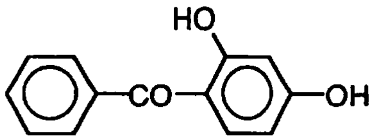

(3)

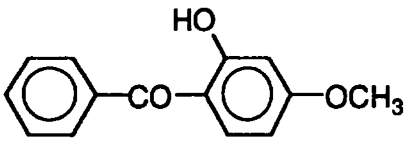

(4)

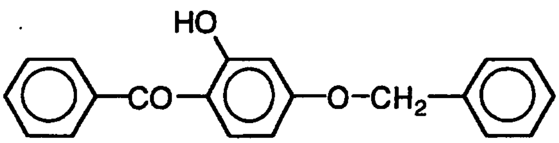

(5)

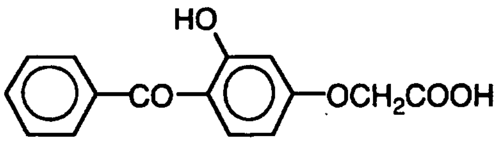

(6)

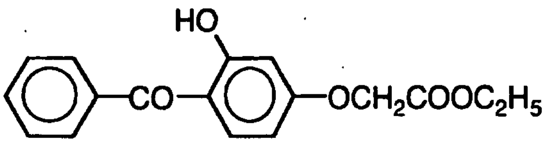

(7)

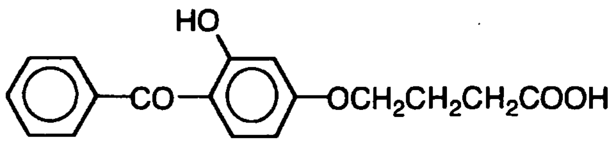

(8)

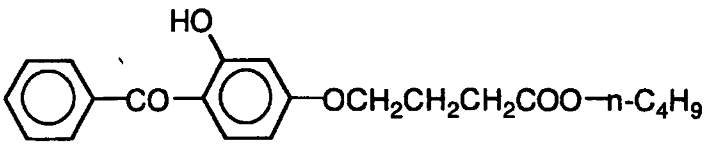

(9)

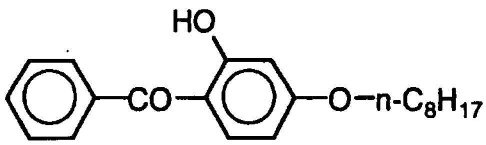

(10)

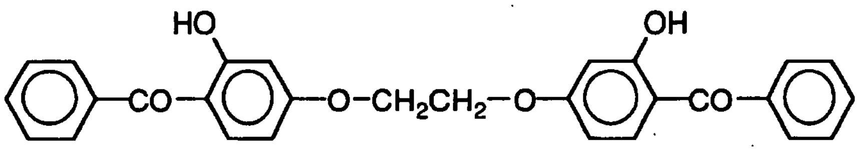

(11)

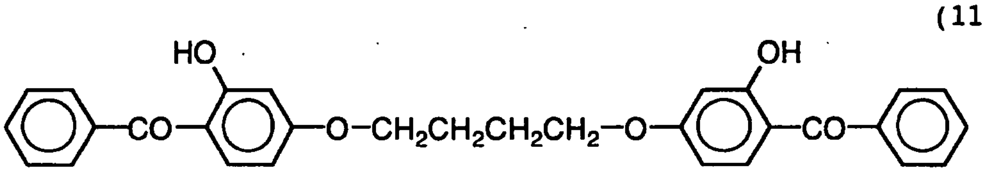

(12)

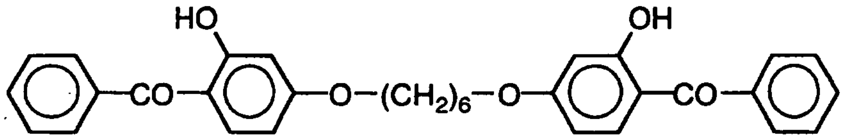

(13)

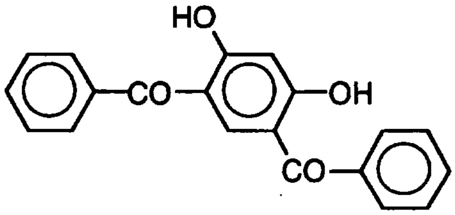

(14)

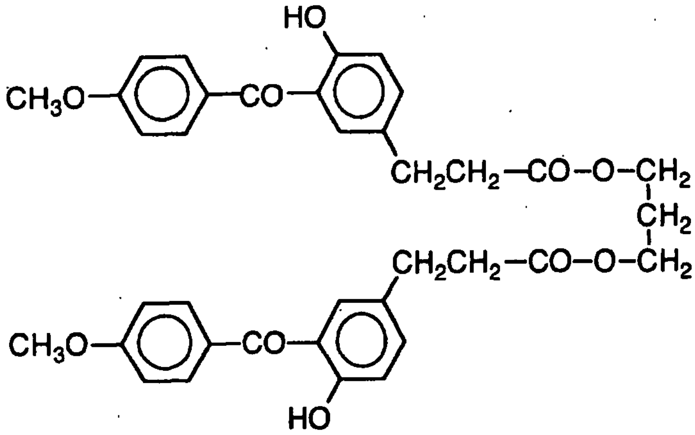

(15)

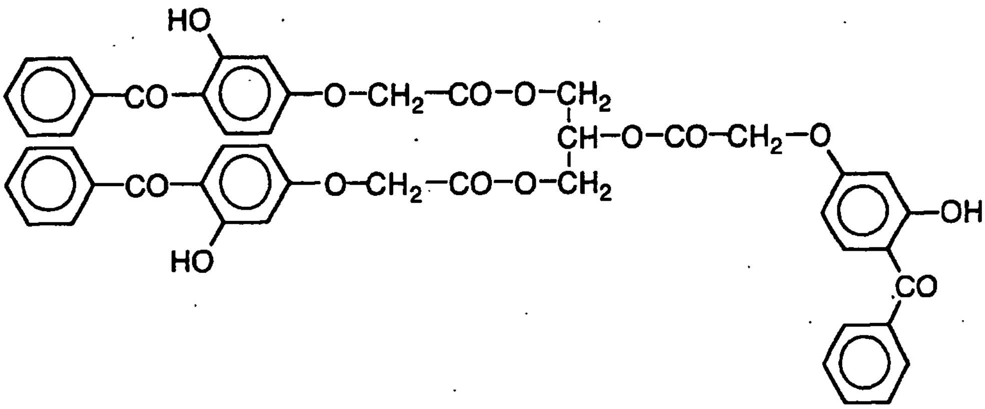

(16)

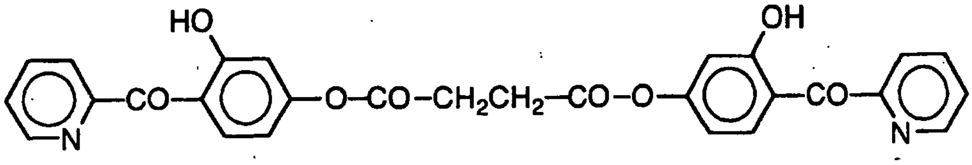

(17)

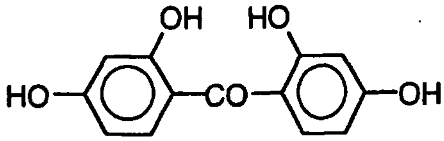

(18)

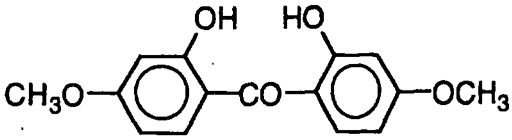

(19)

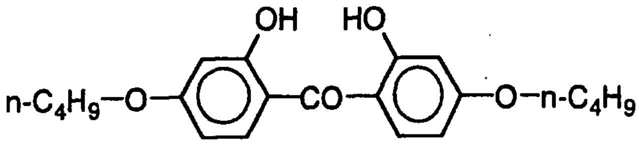

(20)

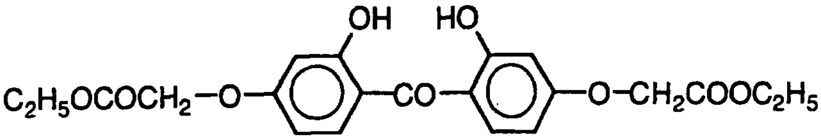

(21)

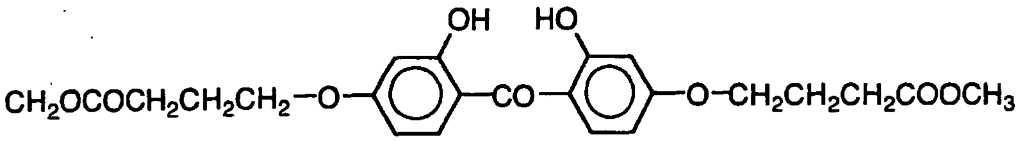

(22)

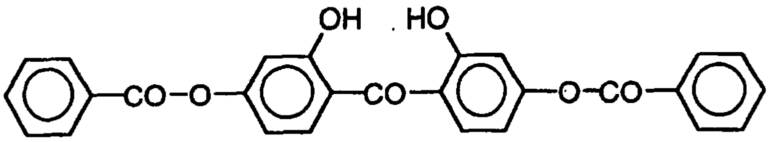

(23)

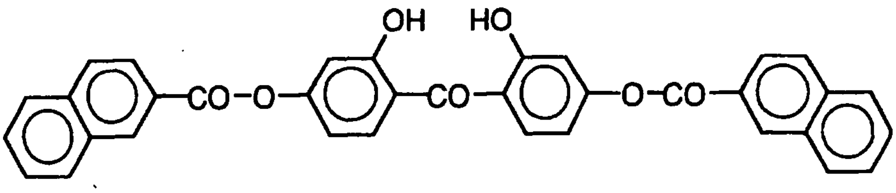

(24)

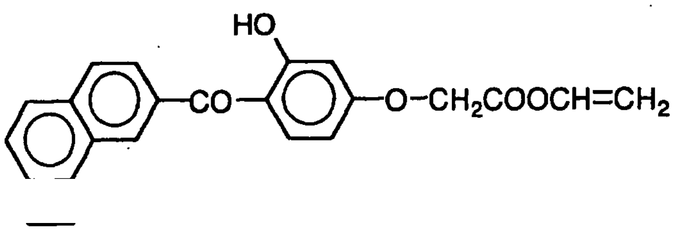

(25)

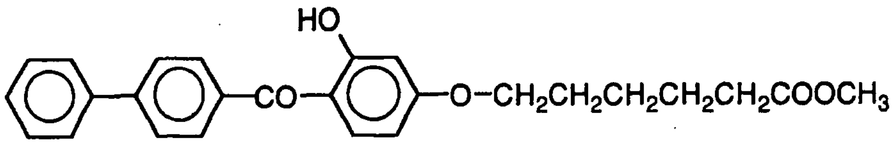

(26)

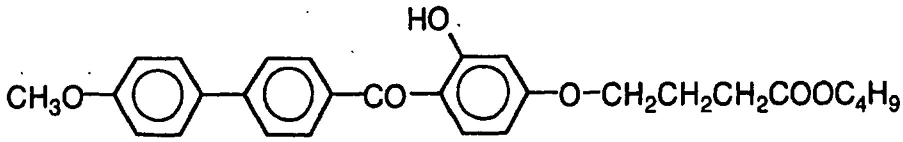

(27)

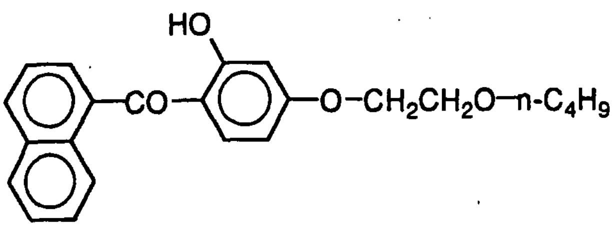

(28)

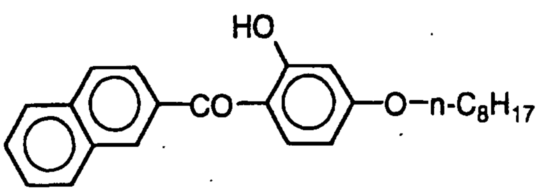

(29)

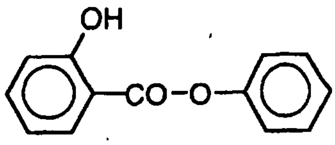

(30)

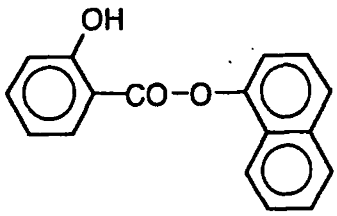

(31)

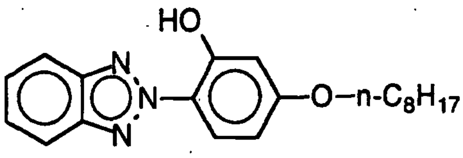

(32)

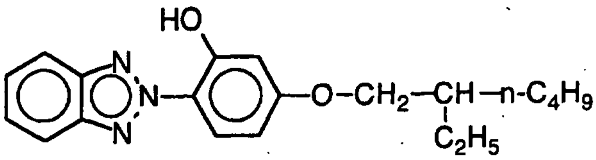

(33)

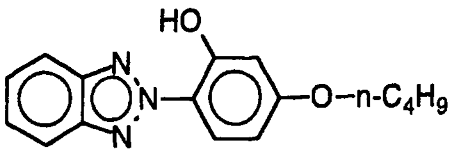

(34)

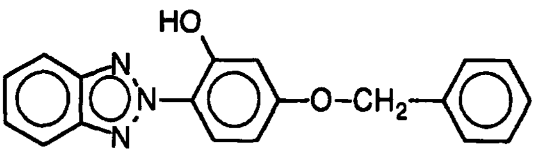

(35)

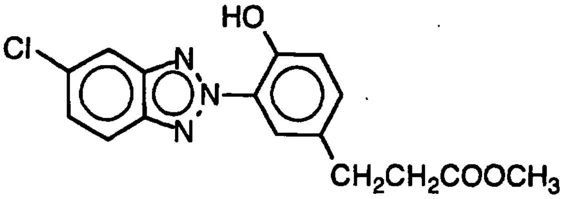

(36)

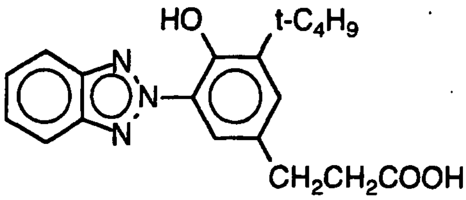

(37)

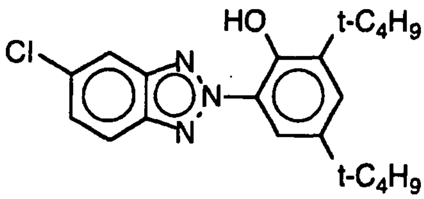

(38)

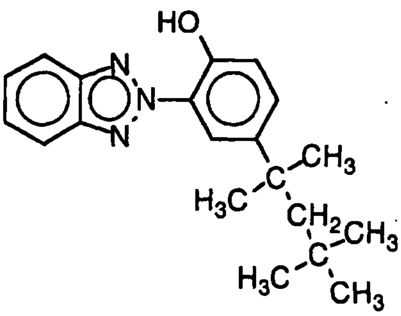

(39)

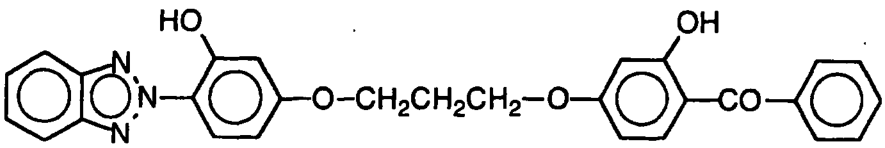

(40)

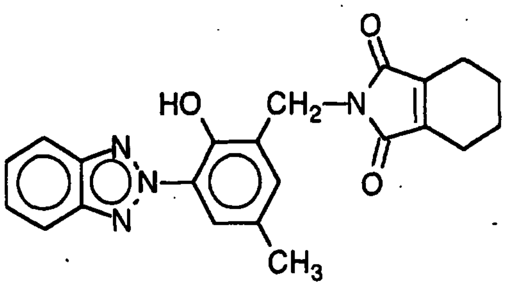

(41)

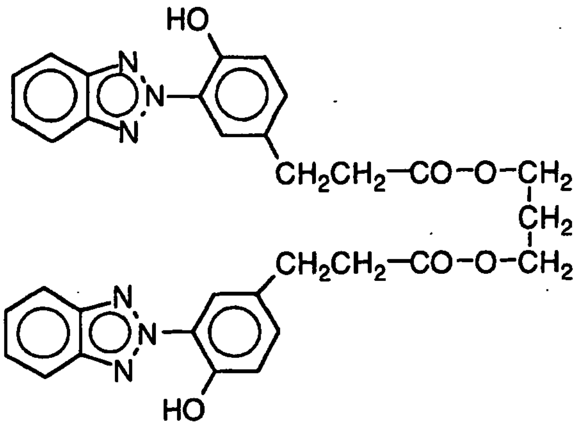

(42)

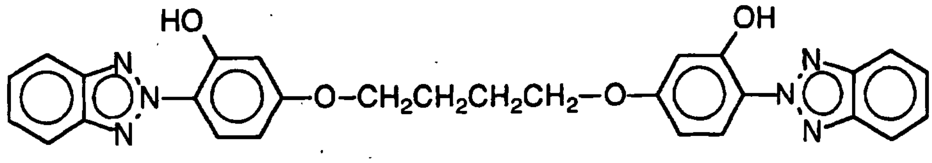

(43)

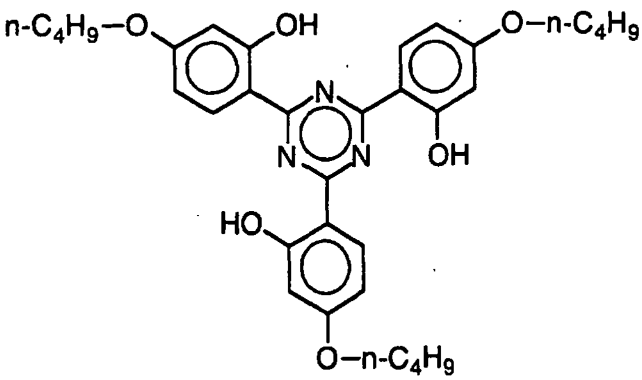

(44)

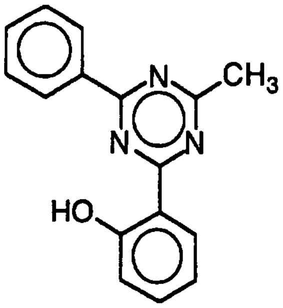

(45)

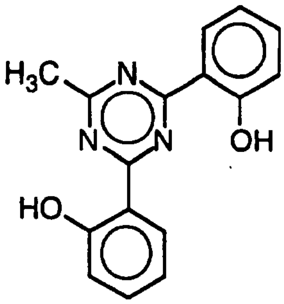

(46)

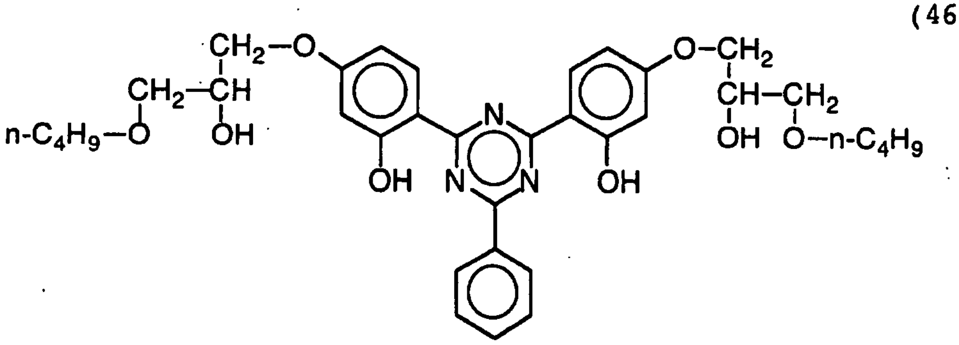

(47)

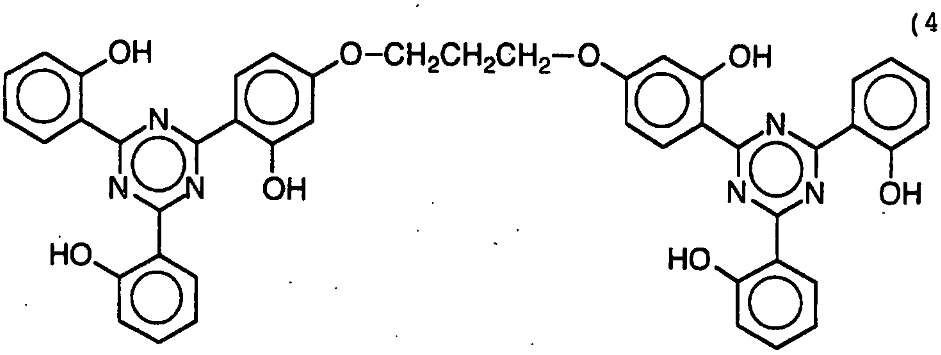

(48)

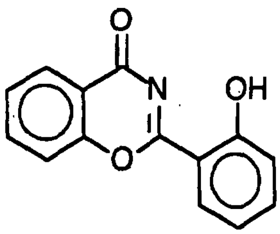

(49)

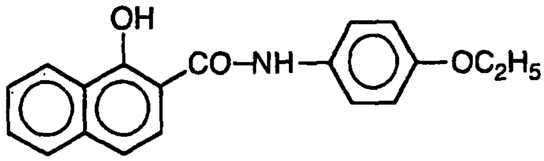

(50)

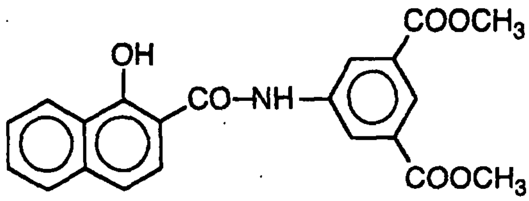

(51)

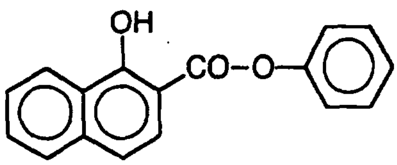

(52)

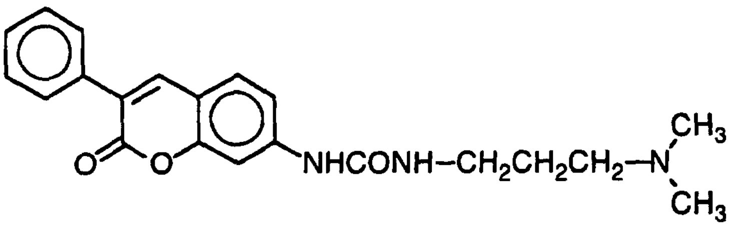

(53)

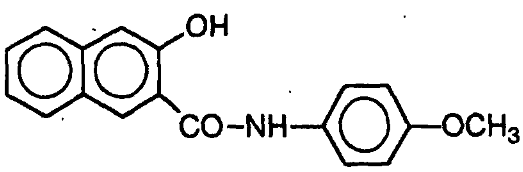

(54)

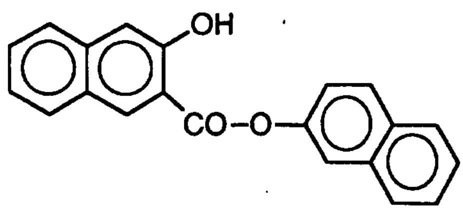

(55)

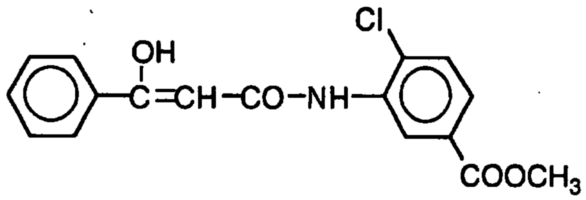

(56)

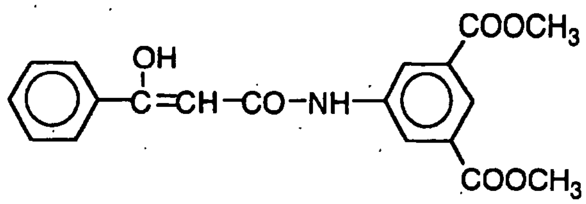

(57)

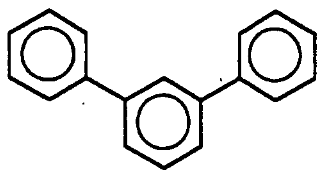

(58)

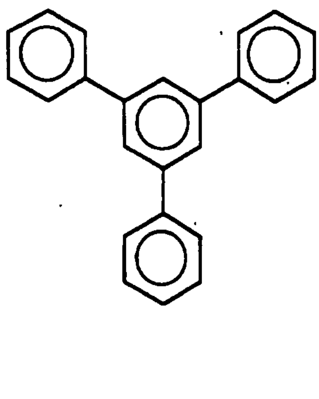

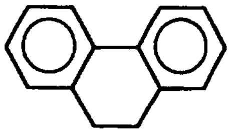

(59)

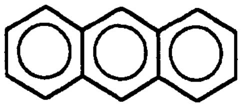

(60)

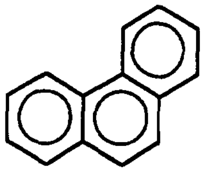

(61)

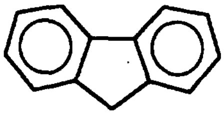

(62)

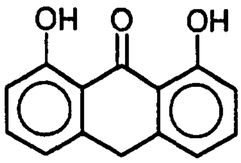

(63)

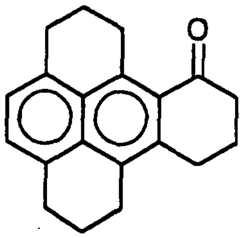

(64)

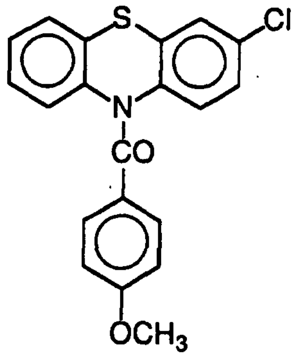

(65)

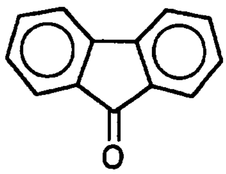

(66)

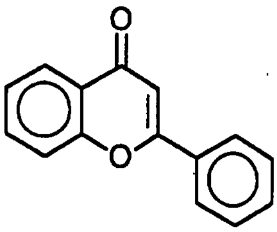

(67)

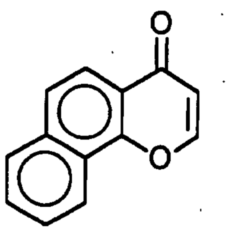

(68)

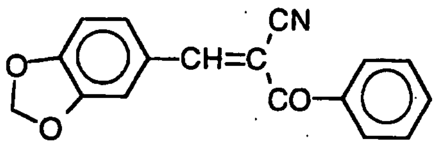

(69)

(70)

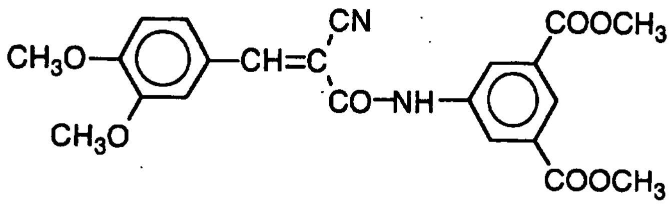

(71)

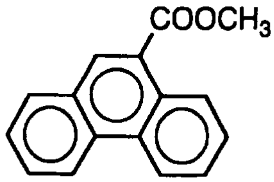

(72)

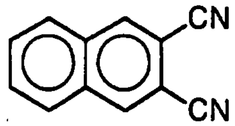

(73)

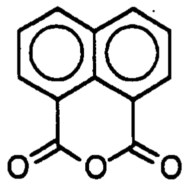

(74)

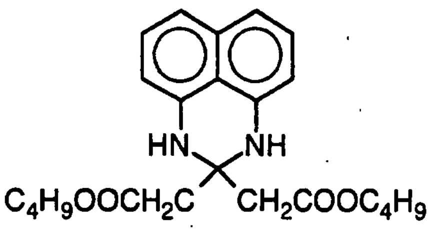

(75)

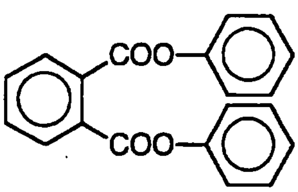

(76)

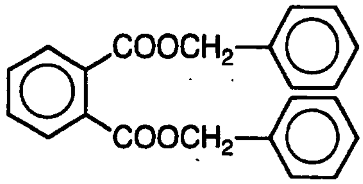

(77)

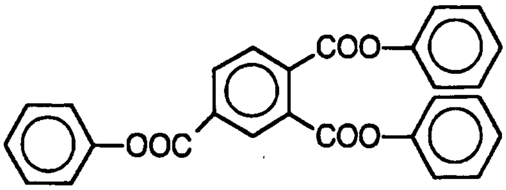

(78)

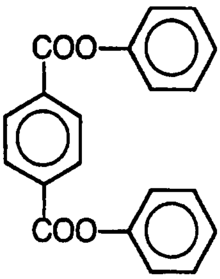

(79)

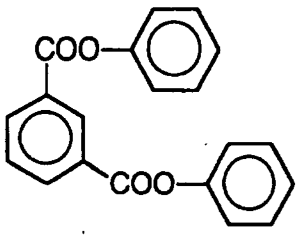

(80)

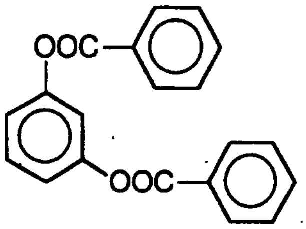

(81)

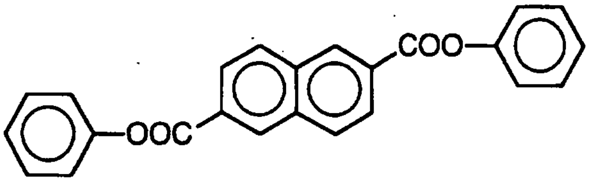

(82)

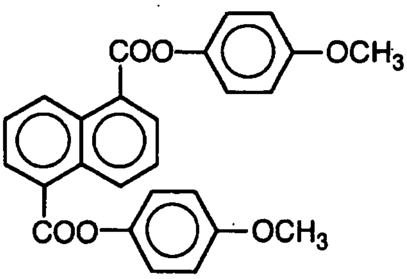

(83)

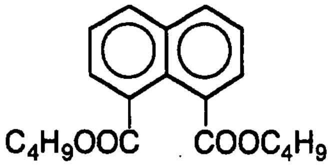

(84)

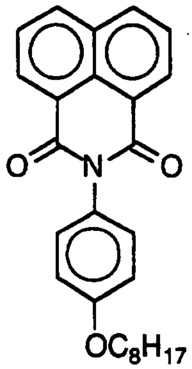

(85)

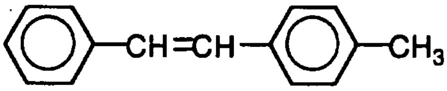

(86)

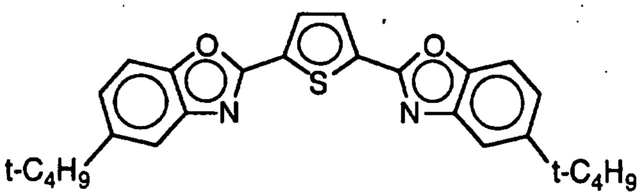

(87)

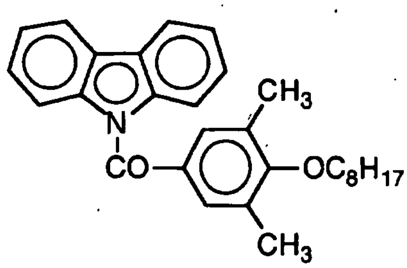

(88)

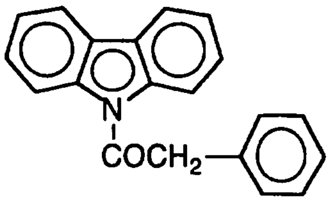

(89)

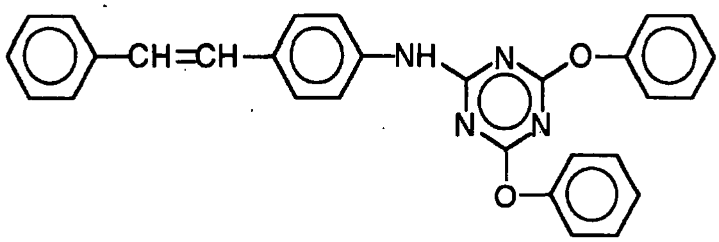

(90)

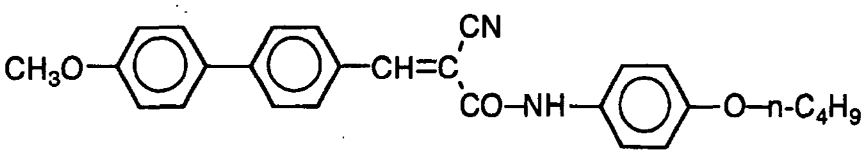

(91)

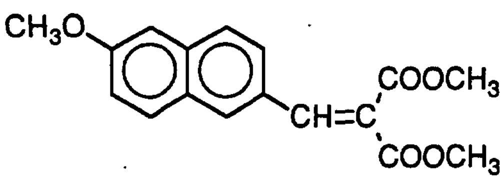

(92)

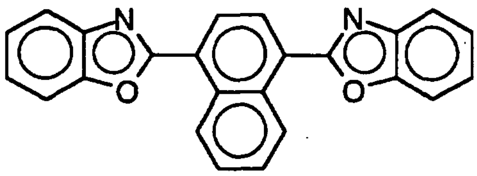

(93)

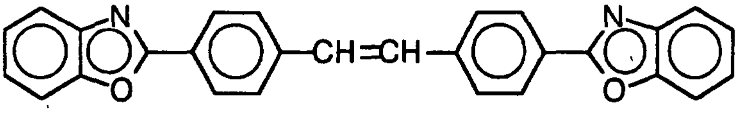

(94)

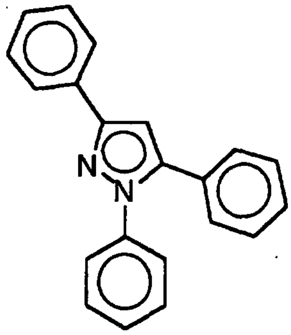

(95)

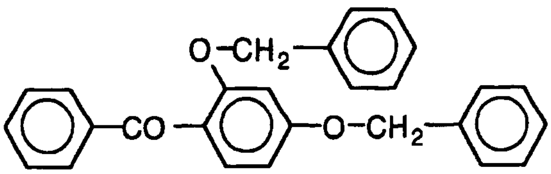

(96)

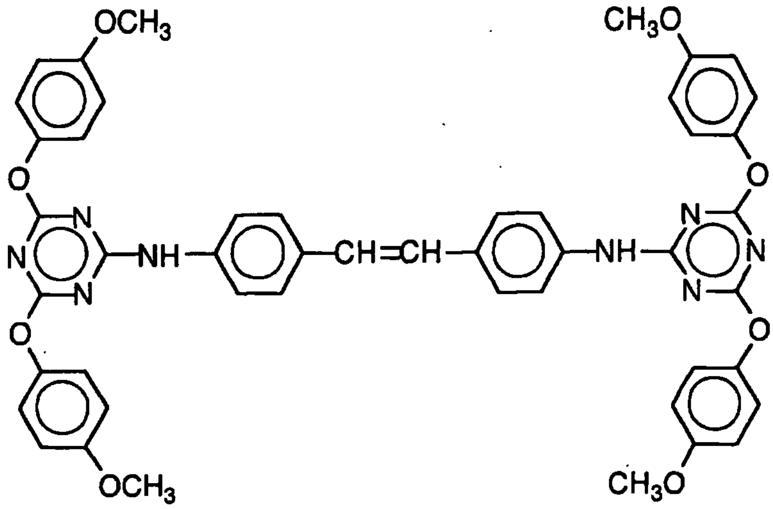

The cellulose ester film is preferably prepared according to a solvent casting method. The solvent casting method comprises dissolving cellulose ester in an organic solvent to prepare a solution (dope) and casting the dope to prepare a film.

The organic solvent is preferably selected from the group consisting of an ether having 3 to 12 carbon atoms, a ketone having 3 to 12 carbon atoms, an ester having 3 to 12 carbon atoms and a halogenated hydrocarbon having 1 to 6 carbon atoms.

The ether, ketone and ester may have a cyclic structure. A compound having two or more functional groups of the ether (-O-), ketone (-CO-) and ester (-COO-) can also be used as the organic solvent. The organic solvent can have another functional group, such as alcoholic hydroxyl. In the case that the organic solvent has two or more functional group, the number of the carbon atoms is defined as a compound having one functional group, which is optionally selected from the group of the organic solvents.

Examples of the ethers having 3 to 12 carbon atoms include diisopropyl ether, dimethoxymethane, 1,4-dioxane, 1,3-dioxolane, tetrahydrofuran, anisole and phenetol.

Examples of the ketones having 3 to 12 carbon atom include acetone, methyl ethyl ketone, diethyl ketone, cyclohexanone and methylcyclohexanone.

Examples of the esters having 3 to 12 carbon atoms include ethyl formate, propyl formate, pentyl formate, methyl acetate, ethyl acetate and pentyl acetate.

Examples of the compounds having two or more kinds of functional groups include 2-ethoxyethyl acetate, 2-methoxyethanol and 2-butoxyethanol.

The halogenated hydrocarbon preferably has one or two carbon atoms, and more preferably has one carbon atom. The halogen atom of the halogenated hydrocarbon preferably is chlorine. The ratio of the substitution of hydrogen with halogen is preferably in the range of 25 to 75 mole %, more preferably in the range of 30 to 70 mole %, further preferably in the range of 35 to 65 mole %, and most preferably in the range of 40 to 60 mole %. Methylene chloride is a representative halogenated hydrocarbon.

Two or more organic solvents can be used in combination.

A solution can be prepared according to a conventional method other than a cooling dissolution method. The conventional method means that the solution is prepared at a temperature of not lower than 0°C (ordinary or elevated temperature). The preparation of the solution can be conducted by using a process and apparatus for preparation of a dope in a conventional solvent casting method. The conventional method preferably uses a halogenated hydrocarbon (particularly methylene chloride) as an organic solvent.

The amount of cellulose ester is so adjusted that a prepared solution contains cellulose ester in an amount of 10 to 40 wt.%. The amount of cellulose ester more preferably is 10 to 30 wt.%. An optional additive (described below) can be added to an organic solvent.

The solution can be prepared by stirring cellulose ester and an organic solvent at an ordinary temperature (0 to 40°C). A solution of a high concentration is preferably prepared by stirring them at an elevated temperature and at a high pressure. In more detail, cellulose ester and the organic solvent are placed in a closed vessel, and are stirred at an elevated temperature and at a high pressure, which is higher than the boiling point of the solvent at atmospheric pressure and is lower than the boiling point of the solvent at the high pressure. The heating temperature is usually not lower than 40°C, preferably in the range of 60 to 200°C, and more preferably in the range of 80 to 110°C.

The components can be preliminary dispersed coarsely, and the coarse dispersion can be placed in the vessel. The components can also be placed in the vessel in series. The vessel should have a stirring device. A pressure can be formed in the vessel by inserting an inactive gas such as nitrogen gas into the vessel. The pressure can be a vapor pressure, which is formed by evaporation of the solvent by heating. Further, the components can be added to the vessel at a high pressure after the vessel is sealed.

The vessel is preferably heated outside. For example, the vessel can be heated by a jacket type heating apparatus. Further, a plate heater can be placed outside the vessel. Furthermore, a heated liquid can be circulated in a tube outside the vessel.

The components are stirred preferably by a stirring wing placed in the vessel. The stirring wing has such a length that the end of the wing reaches near the wall of the vessel. A scratching wing is preferably attached to the end of the stirring wing to scratch the solution retained along the wall of the vessel.

The vessel can have a meter such as a manometer or a thermometer. The components are dissolved in the solvent in the vessel. The prepared dope is cooled in the vessel, or the dope is cooled after the dope is taken out of the vessel. The dope can be cooled by a heat exchanger.

The solution can also be prepared according to a cooling dissolution method. According to the cooling dissolution method, cellulose ester can be dissolved in various organic solvents (other than a halogenated hydrocarbon), in which cellulose ester cannot be dissolved according to a conventional method. Even if cellulose ester is dissolved in an organic solvent (such as a halogenated hydrocarbon), the cooling dissolution method can prepare a solution more quickly. Further, a cellulose ester film having a high birefringence can be formed by using a solution prepared by the cooling

dissolution method.

At the first stage of the cooling dissolution method, cellulose ester is gradually added to an organic solvent while stirring at room temperature.

The amount of cellulose ester is in the range of 10 to 40 wt.%, based on the amount of the mixture. The amount is preferably in the range of 10 to 30 wt.%. An optional additive (described below) can be added to the mixture.

At the next stage, the mixture is cooled to a temperature of -100 to -10°C, preferably -80 to -10°C, more preferably -50 to -20°C, and most preferably -50 to -30°C. The mixture can be cooled in a dry ice/methanol bath (-75°C) or in a cooled diethylene glycol solution (-30 to -20°C). At the cooling stage, the mixture of cellulose ester and the solvent generally solidify.

The cooling rate is preferably faster than 4°C per minute, more preferably faster than 8°C per minute, and most preferably faster than 12°C per minute. The cooling rate is preferably fast as possible. However, a theoretical upper limit of the cooling rate is 10,000°C per second, a technical upper limit is 1,000°C per second, and a practical upper limit is 100°C per second. The cooling rate means the change of temperature at the cooling stage per the time taken to complete the cooling stage. The change of temperature means the difference between the temperature at which the cooling stage is started and the temperature at which the cooling stage is completed.

Subsequently, the mixture is warmed to a temperature of 0 to 200°C, preferably 0 to 150°C, more preferably 0 to 120°C, and most preferably 0 to 50°C to dissolve the cellulose ester in the solvent. The mixture can be warmed by keeping it at room temperature. The mixture can also be warmed on a bath.

The warming rate is preferably faster than 4°C per minute, more preferably faster than 8°C per minute, and most preferably faster than 12°C per minute. The warming rate is preferably fast as possible. However, a theoretical upper limit of the warming rate is 10,000°C per second, a technical upper limit is 1,000°C per second, and a practical upper limit is 100°C per second. The warming rate means the change of temperature at the warming stage per the time taken to complete the warming stage. The change of temperature means the difference between the temperature at which the warming stage is started and the temperature at which the warming stage is completed.

Thus a dope is formed as a uniform solution. If cellulose ester is not sufficiently dissolved, the cooling and warming steps can be repeated. The dope is observed with eyes to determine whether cellulose ester is sufficiently dissolved or not.

A sealed vessel is preferably used in the cooling dissolution method to prevent contamination of water, which is caused by dew condensation at the cooling step. The time for the cooling and warming stages can be shortened by conducting the cooling step at a high pressure and conducting the warming step at a low pressure. A pressure vessel is preferably used at a high or low pressure.

In the case that cellulose acetate (acetic acid content: 60.9%, viscosity average degree of polymerization: 299) is dissolved in methyl acetate by a cooling dissolution method to form 20 wt.% solution, the solution has a pseudo sol-gel phase transition point at about 33°C, which is measured by a differential scanning calorimeter (DSC). Under the transition point, the solution forms a uniform gel. Therefore, the solution should be stored at a temperature higher than the transition point, preferably at a temperature about 10°C higher than the point. The pseudo sol-gel phase transition point depends on the combined average acetic acid content of cellulose acetate, the viscosity average degree of polymerization, the concentration of the dope and the nature of the used organic solvent.

A cellulose ester film can be formed from the cellulose ester solution (dope) according to a solvent casting method.

The dope is cast on a drum or a band, and the solvent is evaporated to form a film. Before casting the dope, the concentration of the dope is so adjusted that the solid content of the dope is in the range of 18 to 35 wt.%. The surface of the drum or band is preferably polished to give a mirror plane. A drum or a band is used as the support. The casting and drying processes in the solvent cast methods are described in U.S. Patent Nos. 2,336,310, 2,367,603, 2,492,078, 2,492,977, 2,492,978, 2,607,704, 2,739,069, 2,739,070, British Patent Nos. 640,731, 736,892, Japanese Patent Publication Nos. 45(1970)-4554, 49(1974)-5614, Japanese Patent Provisional Publication Nos. 60(1985)-176834, 60(1985)-203430 and 62(1987)-115035.

The drum or band preferably has a surface temperature of not higher than 10°C when the dope is cast on the surface. After casting the dope, the dope is preferably dried with air for at least 2 seconds. The formed film is peeled off the drum or band, and the film can be further dried with air to remove the solvent remaining in the film. The temperature of the air can be gradually elevated from 100 to 160°C. The above-mentioned method is described in Japanese Patent Publication No. 5(1993)-17844. According to the method, the time for casting and peeling steps can be shortened. The method requires that the dope should be set to gel at the surface temperature of the drum or band. The dope formed according to the present invention satisfies the requirement.

The cellulose ester film has a thickness preferably in the range of 40 to 120 μm, and more preferably in the range of 70 to 100 μm.

A plasticizer can be added to the cellulose ester film to improve the mechanical strength of the film. The plasticizer has another function of shortening the time for the drying process. Phosphoric esters and carboxylic esters

are usually used as the plasticizer. Examples of the phosphoric esters include triphenyl phosphate (TPP) and tricresyl phosphate (TCP). Examples of the carboxylic esters include phthalic esters and citric esters. Examples of the phthalic esters include dimethyl phthalate (DMP), diethyl phthalate (DEP), dibutyl phthalate (DBP), dioctyl phthalate (DOP), diphenyl phthalate (DPP) and diethylhexyl phthalate (DEHP). Examples of the citric esters include triethyl o-acetylcitrate (OACTE) and tributyl o-acetylcitrate (OACTB). Examples of the other carboxylic esters include butyl oleate, methylacetyl ricinoleate, dibutyl sebacate and various trimellitic esters. Phthalic ester plasticizers (DMP, DEP, DBP, DOP, DPP, DEHP) are preferred. DEP and DPP are particularly preferred.

The amount of the plasticizer is preferably in the range of 0.1 to 25 wt.%, more preferably in the range of 1 to 20 wt.%, and most preferably in the range of 3 to 15 wt.% based on the amount of cellulose ester.

Deterioration inhibitors (e.g., antioxidant peroxide decomposer, radical inhibitor, metal inactivating agent, oxygen scavenger) or ultraviolet inhibitors can be incorporated into the cellulose ester film. The deterioration inhibitors are described in Japanese Patent Provisional Publication Nos. 3(1991)-199201, S(1993)-197073, 5(1993)-194789, 5(1993)-271471 and 6(1994)-1078454. The deterioration inhibitor is preferably in the range of 0.01 to 1 wt.%, and more preferably in the range of 0.01 to 0.2 wt.% based on the amount of the prepared solution (dope). If the amount is less than 0.01 wt.%, the effect of the deterioration inhibitor is insufficient. If the amount were more than 1 wt.%, the inhibitor would bleed out on the surface of the film. Butyrated hydroxytoluene (BHT) is a particularly preferred deterioration inhibitor. The ultraviolet inhibitors are described in Japanese Patent Provisional Publication No. 7(1995)-11056.

Cellulose acetate having an average acetic acid content of 55.0 to 58.0% is usually inferior to cellulose triacetate having an average acetic acid content of higher than 58.0% in view of stability of the solution and physical properties of the film. However, the problem can substantially be solved by using the deterioration inhibitor such as butyrated hydroxytoluene (BHT).

(Surface treatment of transparent support)

The surface of the transparent support at the side of the polarizing membrane can be subjected to a surface treatment, which is conducted to improve the adhesion between the transparent support and a polarizing membrane. The surface treatments include a corona discharge treatment, a glow discharge treatment, a flame treatment, an acid treatment, an alkaline treatment and an ultraviolet irradiation treatment.

The corona discharge treatment and the glow discharge treatment can be conducted by using a commercially available discharging machine.

The discharge treatment is preferably conducted in the presence of steam. The partial pressure of the steam is preferably in the range of 10 to 100%, and more preferably in the range of 40 to 90%. The discharge treatment is preferably conducted after preheating the film. The preheating temperature is preferably higher than 50°C, more preferably higher than 70°C, and most preferably higher than 80°C. The higher limit of the preheating temperature is the glass transition temperature of the cellulose ester.

The degree of vacuum at the glow discharge treatment is preferably in the range of 0.005 to 20 Torr, and more preferably in the range of 0.02 to 2 Torr. The voltage at the glow discharge treatment is preferably in the range of 500 to 5,000 V, and more preferably in the range of 500 to 3,000 V. The glow discharge frequency is preferably in the range of 50 Hz to 20 MHz, and more preferably in the range of 1 KHz to 1 MHz. The glow discharge strength is preferably in the range of 0.01 to 5 KV·A·min/$m^2$, and more preferably in the range of 0.15 to 1 KV·A·min/$m^2$.

The film is preferably cooled immediately after the discharge treatment.

The important factor of the flame treatment is the ratio of the gas (natural gas, propane gas) to the air. The volume ratio of the gas to the air is preferably in the range of 1/13 to 1/21, and more preferably in the range of 1/14 to 1/20. The energy of the flame treatment based the surface of the film is preferably in the range of 1 to 50 kcal/$m^2$. The distance between the top of the inner flame and the surface of the film is preferably shorter than 4 cm.

The acid treatment preferably uses an inorganic acid, such as hydrochloric acid, sulfuric acid or nitric acid. The alkali treatment preferably uses hydroxide of alkali atom such as sodium hydroxide or potassium hydroxide. The acid or alkali treatment is conducted by immersing a film (the side to which a polarizing membrane is attached) in an aqueous acid or alkali solution. The film is immersed in the solution preferably for 30 seconds to 10 minutes. After immersing the film in the solution, the film is preferably washed with water.

The wavelength of the ultraviolet ray at the ultraviolet irradiation treatment is preferably in the range of 220 to 380 nm. The exposure of the ultraviolet ray is preferably in the range of 20 to 10,000 mJ/$cm^3$, more preferably in the range of 50 to 2,000 mJ/$cm^3$ and most preferably in the range of 100 to 1,500 mJ/$cm^3$.

The acid or alkali treatment is preferred. The acid or alkali treatment can function as a saponification treatment because the transparent support is made of a cellulose ester film according to the present invention.

The other side of the film (on which an orientation layer or an optically anisotropic layer is provided) is preferably not subjected to a surface treatment. After forming an optically anisotropic layer on the film, the lamination of the layer and the film can be immersed in an acid or alkali solution to subject only one surface of the film (to which a polarizing

membrane is attached) to the acid or alkali treatment.

A gelatin-undercoating layer is preferably provided to improve the adhesion between the transparent support and the orientation layer or the optically anisotropic layer. The gelatin-undercoating layer has a thickness preferably in the range of 0.01 to 1 μm, more preferably in the range of 0.02 to 0.5 μm, and most preferably in the range of 0.05 to 0.2 μm.

(Orientation layer)

The orientation layer can be formed by rubbing treatment of an organic compound (preferably a polymer), oblique evaporation of an inorganic compound, formation of a micro groove layer, or stimulation of an organic compound (e.g., ω-tricosanoic acid, dioctadecylmethylammonium chloride, methyl stearate) according to a Langmuir-Blodgett method. Further, the aligning function of the orientation layer can be activated by applying an electric or magnetic field to the layer or irradiating the layer with light. The orientation layer is preferably formed by rubbing a polymer. The rubbing treatment can be conducted by rubbing the layer with a paper or cloth several times along a certain direction.

The polymer of the orientation layer is determined according to display mode. For the mode in which most of rod-like liquid crystal molecules in the liquid crystal cell are essentially vertically aligned (i.e., for the mode such as VA, OCB or HAN), an orientation layer which can essentially horizontally align the liquid crystal molecules is used. For the mode in which most of rod-like liquid crystal molecules in the liquid crystal cell are essentially horizontally aligned (i.e., for the mode such as STN), an orientation layer which can essentially vertically align the liquid crystal molecules is used. Further, for the mode in which most of rod-like liquid crystal molecules in the liquid crystal cell are essentially obliquely aligned (i.e., for the mode such as TN), an orientation layer that can obliquely align the liquid crystal molecules is used.

Polymers used in the orientation layer are described in above-mentioned many publications about optical compensatory sheets using discotic liquid crystal molecules corresponding to various display modes.

The polymer used in the orientation layer can be cross-linked to enhance the mechanical strength of the orientation layer. The polymer can be cross-linked by introducing a cross-linkable group into the polymer and causing a reaction between the cross-linkable groups. Japanese Patent Provisional Publication No. 8(1996)-338913 discloses the cross-link of the polymer used in the orientation layer.

The orientation layer has a thickness preferably in the range of 0.01 to 5 μm, more preferably in the range of 0.05 to 1 μm.

After the liquid crystal molecule is aligned by using the orientation layer and fixed while keeping the alignment to form an optically anisotropic layer, the optically anisotropic layer can be transferred to a support. The aligned and fixed liquid crystal molecule can keep the alignment without the orientation layer. Accordingly, the orientation layer is not essential in the ellipsoidal polarizing plate, while the orientation layer is essential in the preparation of the ellipsoidal polarizing plate using the liquid crystal molecule.

(Optically anisotropic layer)

The optically anisotropic layer is made from liquid crystal molecules.

The liquid crystal molecules preferably are rod-like liquid crystal molecules or discotic liquid crystal molecules. The discotic liquid crystal molecules are particularly preferred.

Examples of the rod-like liquid crystal molecules include azomethines, azoxy compounds, cyanobiphenyls, cyanophenyl esters, benzoic esters, phenyl cyclohexanecarbonate esters, cycnophenylcyclohexanes, cyano-substituted phenylpyrimidines, alkoxy-substituted phenylpyrimidines, phenyldioxanes, tolans and alkenylcyclohexylbenzonitriles. Further, the rod-like liquid crystal molecules include liquid crystal polymers, which has a structure of the rod-like liquid crystal molecule in the repeating unit. Japanese Patent Provisional Publication No. 5(1993)-53016 discloses an optical compensatory sheet using the liquid crystal polymer.

The discotic liquid crystal molecule is described in various documents (C. Destrade et al., Mol. Crysr. Liq. Cryst., vol. 71, page 111 (1981); Japan Chemical Society, Quarterly Chemical Review (written in Japanese), chapter 5 and chapter 10, section 2 (1994); B. Kohne et al., Angew. Chem. Soc. Chem. Comm., page 1794 (1985); and J. Zhang et al., J. Am. Chem. Soc., vol. 116, page 2655 (1994)). The polymerization reaction of the discotic liquid crystal molecule is described in Japanese Patent Provisional Publication No. 8(1996)-27284.

. A polymerizable group should be bound to a discotic core of the discotic liquid crystal molecule to cause the polymerization reaction of the compound. However, if the polymerizable group is directly bound to the discotic core, it is difficult to keep the alignment at the polymerization reaction. Therefore, a linking group is introduced between the discotic core and the polymerizable group. Accordingly, the discotic liquid crystal molecule having a polymerizable group preferably is a compound represented by the following formula (I).

$$D(\text{-}L\text{-}P)_n \qquad (I)$$

In the formula (I), D is a discotic core; L is a divalent linking group; P is a polymerizable group; and n is an integer of 4 to 12.

Examples of the discotic cores (D) are shown below. In the examples, LP (or PL) means the combination of the divalent linking group (L) and the polymerizable group (P).

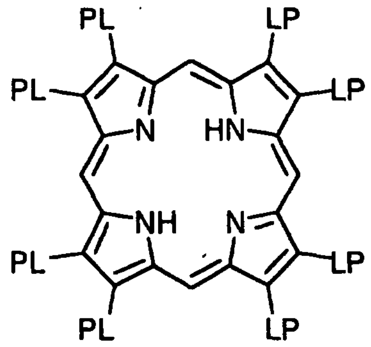

(D1)

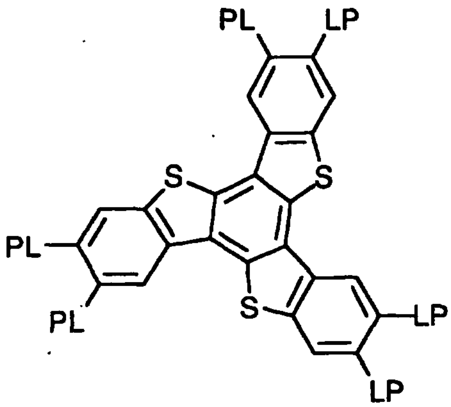

(D2)

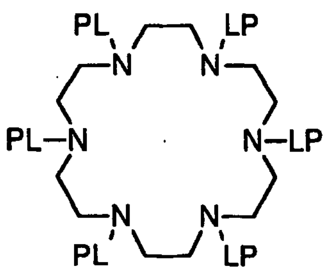

(D3)

(D4)

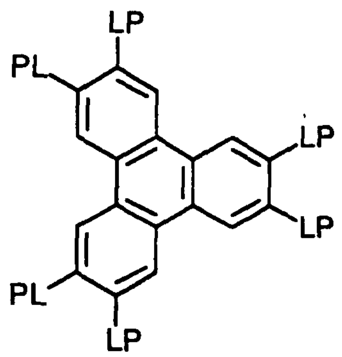

(D5)

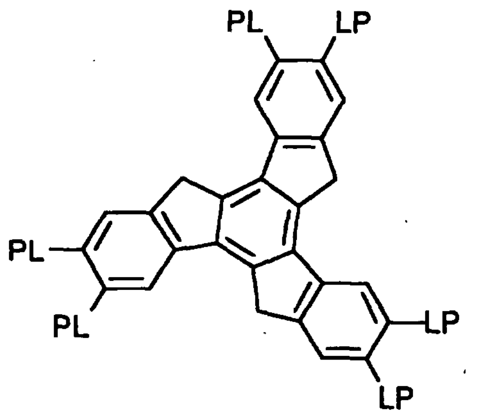

(D6)

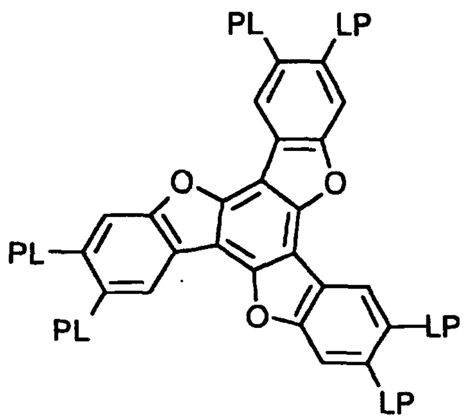

(D7)

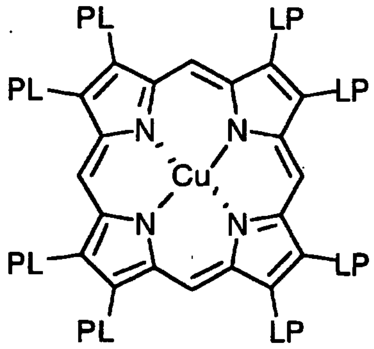

(D8)

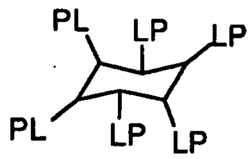

(D9)

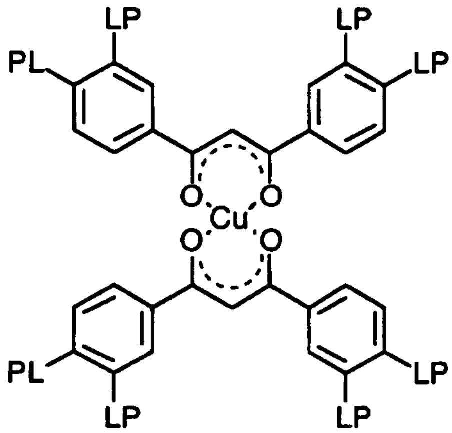

(D10)

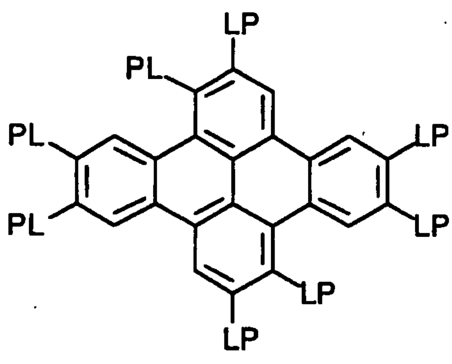

(D11)

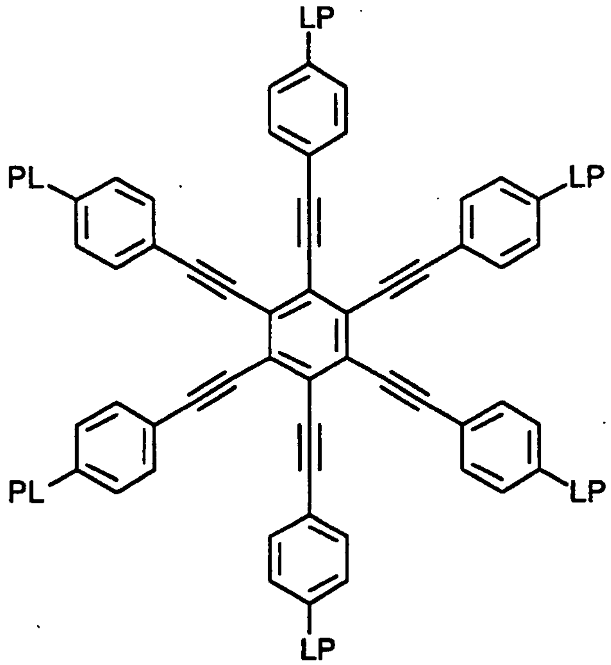

(D12)

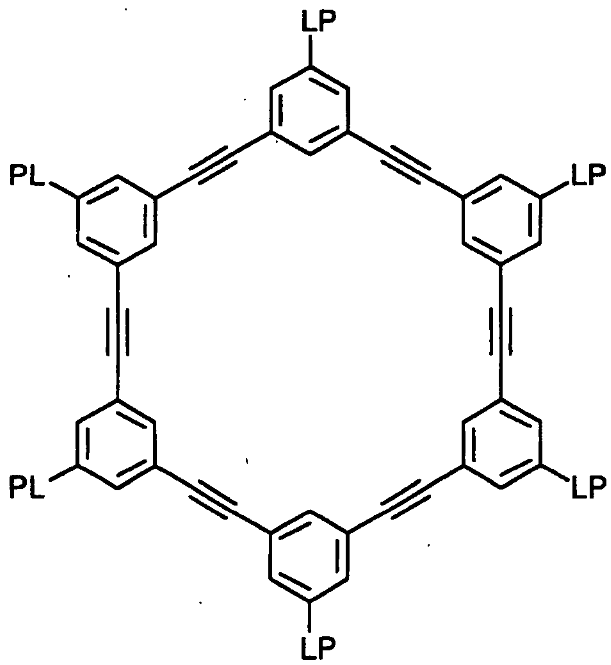

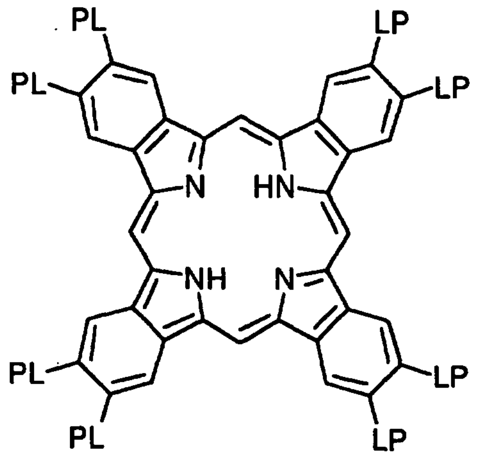

(D13)

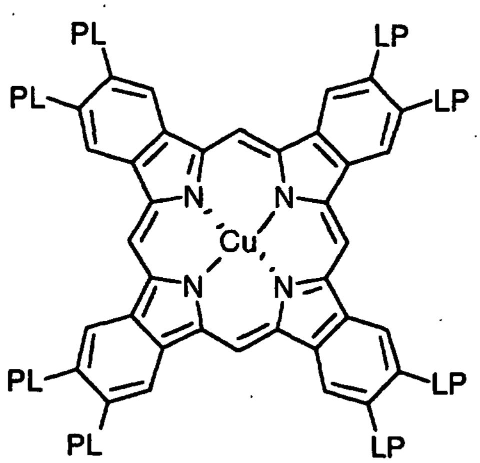

(D14)

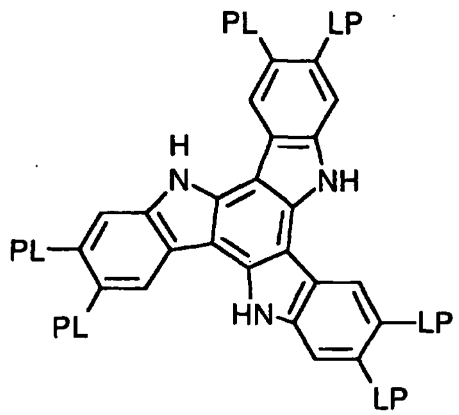

(D15)

In the formula (I), the divalent linking group (L) preferably is selected from the group consisting of an alkylene group, an alkenylene group, an arylene group, -CO-, -NH-, -O-, -S- and combinations thereof. L more preferably is a divalent linking group comprising at least two divalent groups selected from the group consisting of an alkylene group, an alkenylene group, an arylene group, -CO-, -NH-, -O- and -S-. L more preferably is a divalent linking group comprising at least two divalent groups selected from the group consisting of an alkylene group, an alkenylene group, an arylene

group -CO- and -O-. The alkylene group preferably has 1 to 12 carbon atoms. The alkenylene group preferably has 2 to 12 carbon atoms. The arylene group preferably has 6 to 10 carbon atoms. The alkylene group, the alkenylene group and the arylene group may have a substituent group (e.g., an alkyl group, a halogen atom, cyano, an alkoxy group, an acyloxy group).

Examples of the divalent linking groups (L) are shown below. In the examples, the left side is attached to the discotic core (D), and the right side is attached to the polymerizable group (P). AL means an alkylene group or an alkenylene group, and AR means an arylene group.

L1: -AL-CO-O-AL-

L2: -AL-CO-O-AL-O-

L3: -AL-CO-O-AL-O-AL-

L4: -AL-CO-O-AL-O-CO-

L5: -CO-AR-O-AL-

L6: -CO-AR-O-AL-O-

L7: -CO-AR-O-AL-O-CO-

L8: -CO-NH-AL-

L9: -NH-AL-O-

L10: -NH-AL-O-CO-

L11: -O-AL-

L12: -O-AL-O-

L13: -O-AL-O-CO-

L14: -O-AL-O-CO-NH-AL-

L15: -O-AL-S-AL-

L16: -O-CO-AL-AR-O-AL-O-CO-

L17: -O-CO-AR-O-AL-CO-

L18: -O-CO-AR-O-AL-O-CO-

L19: -O-CO-AR-O-AL-O-AL-O-CO-

L20: -O-CO-AR-O-AL-O-AL-O-AL-O-CO-

L21: -S-AL-

L22: -S-AL-O-

L23: -S-AL-O-CO-

L24: -S-AL-S-AL-

The polymerizable group (P) is determined by the polymerization reaction. Examples of the polymerizable groups (P) are shown below.

$$-CH=CH_2$$ (P1)

$$-C\equiv CH$$ (P2)

$$-CH_2-C\equiv CH$$ (P3)

$$-NH_2$$ (P4)

$$-SO_3H$$ (P5)

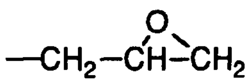
(P6)

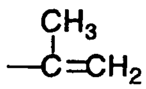
(P7)

$$-CH=CH-CH_3$$ (P8)

$$-N=C=S$$ (P9)

$$-SH$$ (P10)

$$-CHO$$ (P11)

(P12)

$—OH$

(P13)

$—CO_2H$

(P14)

$—N=C=O$

(P15)

$—CH=CH—C_2H_5$

(P16)

$—CH=CH—n\text{-}C_3H_7$

(P17)

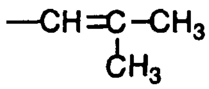

(P18)

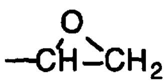

The polymerizable group (P) preferably is an unsaturated polymerizable group (P1, P2, P3, P7, P8, P15, P16, P17) or an epoxy group (P6, P18), more preferably is an unsaturated polymerizable group, and most preferably is an ethylenically unsaturated group (P1, P7, P8, P15, P16, P17).

In the formula (I), n is an integer of 4 to 12, which is determined by the chemical structure of the discotic core (D). The 4 to 12 combinations of L and P can be different from each other. However, the combinations are preferably identical.

Two or more discotic liquid crystal molecules can be used in combination. For example, a non-polymerizable discotic liquid crystal compound can be used in combination with the above-mentioned polymerizable discotic liquid crystal compound. The non-polymerizable discotic liquid crystal compound is represented by the following formula (II).

$$D(\text{-}L\text{-}R)_n \qquad (II)$$

In the formula (II), D is a discotic core; L is a divalent linking group; P is a polymerizable group; and n is an integer of 4 to 12.

Examples of the discotic cores (D) are the same as the examples of D in the polymerizable discotic liquid crystal compounds, except that LP (or PL) is changed to LR (or RL).

Examples of the divalent linking groups (L) are the same as the examples of L in the polymerizable discotic liquid crystal compounds.

The alkyl group (R) preferably has 1 to 40 carbon atoms, and more preferably has 1 to 30 carbon atoms. An alkyl group of a chain structure is preferred to a cyclic alkyl group. A normal alkyl group is preferred to a branched alkyl group. R most preferably is hydrogen or a normal alkyl group having 1 to 30 carbon atoms.

An optically anisotropic layer can be formed by coating a solution containing the liquid crystal molecule, a polymerization initiator (described below) and other optional components (e.g., a plasticizer, a monomer, a surface active agent, cellulose ester, 1,3,5-triazine compound, a chiral agent) on an orientation layer.

The solution is preferably prepared by using an organic solvent. Examples of the organic solvents include an amide (e.g., dimethylformamide), a sulfoxide (e.g., dimethylsulfoxide), a heterocyclic compound (e.g., pyridine), a hydrocarbon (e.g., benzene, hexane), an alkyl halide (e.g., chloroform, dichloromethane), an ester (e.g., methyl acetate, butyl acetate), a ketone (e.g., acetone, methyl ethyl ketone) and an ether (e.g., tetrahydrofuran, 1,2-dimethoxyethane). The alkyl halide and the ketone are preferred. Two or more organic solvents can be used in combination.

The solution can be coated according to a conventional coating method (e.g., extrusion coating method, direct gravure coating method, reverse gravure coating method, die coating method).

The liquid crystal molecules are preferably oriented in essentially uniform alignment, and more preferably fixed while keeping the alignment. The liquid crystal molecules are fixed preferably by a polymerization reaction. The polymerization reaction can be classified a thermal reaction using a thermal polymerization initiator and a photo reaction using a photo polymerization initiator. A photo polymerization reaction is preferred.

Examples of the photo polymerization initiators include α-carbonyl compounds (described in U.S. Patent Nos. 2,367,661, 2,367,670), acyloin ethers (described in U.S. Patent No. 2,448,828), α-hydrocarbon substituted acyloin compounds (described in U.S. Patent No. 2,722,512), polycyclic quinone compounds (described in U.S. Patent Nos. 2,951,758, 3,046,127), combinations of triarylimidazoles and p-aminophenyl ketones (described in U.S. Patent No. 3,549,367), acridine or phenazine compounds (described in Japanese Patent Provisional Publication No. 60(1985)-105667 and U.S. Patent No. 4,239,850) and oxadiazole compounds (described in U.S. Patent No. 4,212,970).

The amount of the photo polymerization initiator is preferably in the range of 0.01 to 20 wt. %, and more preferably in the range of 0.5 to 5 wt.% based on the solid content of the coating solution of the layer.

The light irradiation for the photo polymerization is preferably conducted by an ultraviolet ray. The exposure energy is preferably in the range of 20 $mJ/cm^2$ to 50 $J/cm^2$, and more preferably in the range of 100 $mJ/cm^2$ to 800 $mJ/cm^2$. The light irradiation can be conducted while heating the layer to accelerate the photo polymerization reaction.

The optically anisotropic layer has a thickness preferably in the range of 0.1 to 10 μm, more preferably in the range of 0.5 to 5 μm, and most preferably in the range of 1 to 5 μm. The optically anisotropic layer is sometime made relatively thick (for example, 3 to 10 μm) to obtain a high optical anisotropy corresponding to a mode of a liquid crystal cell.

(Liquid crystal display)

The ellipsoidal polarizing plate can be applied to liquid crystal cells of the described various display modes, such as TN (twisted nematic) mode, IPS (in-plane switching) mode, FLC (ferroelectric liquid crystal) mode, OCB (optically compensatory bend) mode, STN (super twisted nematic) mode, VA (vertically aligned) mode, GH (Guest Host) mode and HAN (hybrid aligned nematic) mode. The ellipsoidal polarizing plate according to the present invention is effective in a liquid crystal display of the above-described display mode.

[Example 1]

(Preparation of transparent support)

With 45 weight parts of cellulose acetate (average acetic acid content: 60.9%), 1.35 weight parts of the retardation-increasing agent (4), 232.72 weight parts of methylene chloride, 42.57 weight parts of methanol and 8.50 weight parts of n-butanol were mixed at room temperature to prepare a solution.

The obtained solution (dope) was cast on a band using a band-casting machine (effective length: 6 m). The dry thickness of the formed film was 100 μm.

The Rth retardation value was measured by using an ellipsometer (M-150, Japan Spectrum Co., Ltd.) at the wavelength of 550 nm. The Rth retardation value was 80 nm.

(Formation of orientation layer)

A gelatin-undercoating layer (thickness: 0.1 μm) was formed on the transparent support.

An aqueous solution of the following denatured polyvinyl alcohol was coated on the undercoating layer, and air-dried at 80°C. The layer was subjected to a rubbing treatment to form an orientation layer.

(Denatured polyvinyl alcohol)

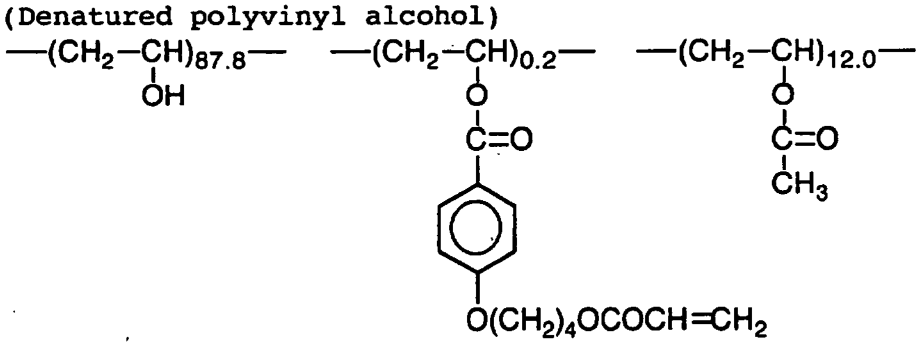

(Formation of optically anisotropic layer)

In 3.43 g of methyl ethyl ketone, 1.8 g of the following discotic liquid crystal compound, 0.2 g of trimethylolpropane triacrylate denatured with ethylene oxide (V#360, Osaka Organic Chemical Co., Ltd.), 0.04 g of cellulose acetate butyrate (CAB531-1.0, Eastman Chemical), 0.06 g of a photopolymerization initiator (Irgacure 907, Ciba-Geigy) and 0.02 g of a sensitizer (Kayacure DETX, Nippon Kayaku Co., Ltd.) were dissolved to prepare a coating solution. The coating solution was coated on the orientation layer by using a wire bar of #3. The sheet was adhered to a metal frame, and heated in a thermostat at 120°C for 3 minutes to align the discotic liquid crystal compound. The sheet was irradiated with an ultraviolet ray at 120°C for 1 minute by using a high-pressure mercury lamp of 120 W/cm to polymerize the vinyl group of the discotic liquid crystal compound and to fix the alignment. The sheet was cooled to room temperature.

(Discotic liquid crystal molecule)

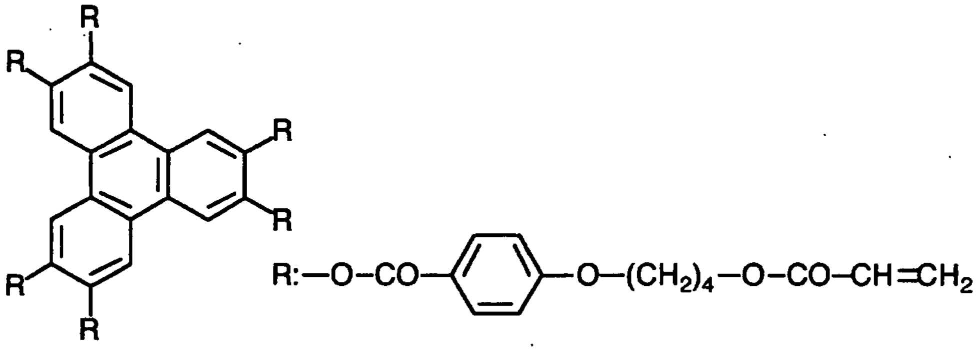

The thickness of the optically anisotropic layer was 1.0 μm. The retardation value of the lamination of the transparent support and the optically anisotropic layer was measured along the rubbing direction. The average inclined angle of the optic axis of the optically anisotropic layer was 14°. The Rth retardation value of the sheet was 154 nm.

(Surface treatment of transparent support)

The lamination of the transparent support and the optically anisotropic layer was immersed in 1.5 N aqueous solution of sodium hydroxide at 50°C for 3 minutes. The sheet was washed with water in a bath at the room temperature. The sheet was neutralized with 1.5 N of sulfuric acid. The sheet was again washed with water in a bath at the room temperature. The sheet was air-dried at 100°C. Thus, the back side (on which the optically anisotropic layer was not provided) of the transparent support was subjected to the saponification treatment.

(Preparation of transparent protective film)

A cellulose triacetate film (Fuji TAC, Fuji Photo Film Co., Ltd.) having the thickness of 100 μm was subjected to a saponification treatment in the same manner as is described above to prepare a transparent protective film. The Rth retardation value of the protective film was 40 nm. The optical axis of the film was essentially parallel to the nominal line of the film, which means that the film is optically uniaxially negative.

(Preparation of ellipsoidal polarizing plate)

A polyvinyl alcohol film was stretched and treated to adsorb iodine to prepare a polarizing membrane. The transparent support of the sheet (comprising the support and the optical anisotropic layer) was attached to one side of the polarizing membrane by using a polyvinyl alcohol adhesive. The transparent protective film was attached to the other side of the membrane by using a polyvinyl alcohol adhesive. The light absorbing axis of the polarizing membrane was parallel to the rubbing direction of the optically anisotropic layer. As a result, a direction obtained by projecting on a film plane an average direction of the symmetrical molecular axes of the discotic liquid crystal compounds (which mean normal lines of the discotic planes of the triphenylene rings) was parallel to the light absorbing axis of the polarizing membrane. Thus an ellipsoidal polarizing plate was prepared.

The ellipsoidal polarizing plate was attached to a glass plate by using an acrylic adhesive, and subjected to an aging treatment at a high temperature under a high pressure. The plate was further placed in a thermostat of 90°C, and left for 500 hours. The ellipsoidal polarizing plate was then examined. As a result, problems (such as separation, bubbles, wrinkles) were not observed. The plate was furthermore placed in the thermostat of 90°C, and left for 500 hours (total: 1,000 hours). The ellipsoidal polarizing plate was then examined. As a result, problems (such as separation, bubbles, wrinkles) were not observed.

(Preparation of liquid crystal display)

A polyimide orientation layer was formed on a transparent ITO electrode on a glass substrate. The orientation layer was subjected to a rubbing treatment. The two substrates were laminated while placing spacers of 5 μm between the substrates. The rubbing direction of one orientation layer was perpendicular to the rubbing direction of the other orientation layer. Rod-like liquid crystal molecules (ZL4792, Merck Japan) were inserted into the gap of the substrates to form a liquid crystal layer. The $\Delta n$ of the liquid crystal molecule was 0.0969.

Two ellipsoidal polarizing plates were laminated on the each side of the prepared TN liquid crystal cell to prepare a liquid crystal display. The optically anisotropic layer was attached to the substrate of the liquid crystal cell. The rubbing direction of the optically anisotropic layer was anti-parallel to the rubbing direction of the liquid crystal cell.

Voltage was applied to the liquid crystal cell. A ratio of the transmittance (white of 2V per black of 5V) was measured as a contrast ratio. The upward, downward, leftward and rightward contrast ratios were measured. Further, 8 gradations were displayed at a voltage between 2V to 5V to determine an angle causing a reverse gradation. As a result, the viewing angles that can view an image having a contrast ratio of not smaller than 10 and causing no reverse gradation were 110° along upward and downward directions and 120° along leftward and rightward directions.

[Example 2]

(Surface treatment of transparent support)

On the transparent support of the sheet (comprising the support and the optically anisotropic layer) prepared in Example 1, 1.5 N aqueous solution of sodium hydroxide (60°C) was sprayed. An extra amount of the solution was scraped with a bar coater. After 3 minutes, the sheet was washed with water in a bath at the room temperature. The sheet was neutralized with 1.5 N of sulfuric acid. The sheet was again washed with water in a bath at the room temperature. The sheet was air dried at 100°C. Thus, the back side (on which the optically anisotropic layer was not provided) of the transparent support was subjected to the saponification treatment.

(Preparation of ellipsoidal polarizing plate)

An ellipsoidal polarizing plate was prepared in the same manner as in Example 1, except that the above-treated sheet was used.

The prepared ellipsoidal polarizing plate was attached to a glass plate by using an acrylic adhesive, and subjected to an aging treatment at a high temperature under a high pressure. The plate was further placed in a thermostat of 90°C, and left for 500 hours. The ellipsoidal polarizing plate was then examined. As a result, problems (such as separation, bubbles, wrinkles) were not observed. The plate was furthermore placed in the thermostat of 90°C, and left for 500 hours (total: 1,000 hours). The ellipsoidal polarizing plate was then examined. As a result, problems (such as separation, bubbles, wrinkles) were not observed.

(Preparation of liquid crystal display)

A liquid crystal display was prepared in the same manner as in Example 1, except that the above-prepared

ellipsoidal polarizing plate was used.

Voltage was applied to the liquid crystal cell. A ratio of the transmittance (white of 2V per black of 5V) was measured as a contrast ratio. The upward, downward, leftward and rightward contrast ratios were measured. Further, 8 gradations were displayed at a voltage between 2V to 5V to determine an angle causing a reverse gradation. As a result, the viewing angles that can view an image having a contrast ratio of not smaller than 10 and causing no reverse gradation were 110° along upward and downward directions and 120° along leftward and rightward directions.

[Example 3]

(Surface treatment of transparent support)

The transparent support of the sheet (comprising the support and the optically anisotropic layer) prepared in Example 1 was subjected to a corona discharge treatment by using a solid state corona discharging machine (Model 6KVA, Pillar). The treating speed was 20 m per min, treating amount was 0.375 KV·A·min/$m^2$, the discharging frequency was 9.6 KHz, and the gap clearance between the electrode and the dielectric roll was 1.6 mm. Thus, the back side (on which the optically anisotropic layer was not provided) of the transparent support was subjected to the corona discharge treatment.

(Preparation of ellipsoidal polarizing plate)

An ellipsoidal polarizing plate was prepared in the same manner as in Example 1, except that the above-treated sheet was used.

The prepared ellipsoidal polarizing plate was attached to a glass plate by using an acrylic adhesive, and subjected to an aging treatment at a high temperature under a high pressure. The plate was further placed in a thermostat of 90°C, and left for 500 hours. The ellipsoidal polarizing plate was then examined. As a result, problems (such as separation, bubbles, wrinkles) were not observed. The plate was furthermore placed in the thermostat of 90°C, and left for 500 hours (total: 1,000 hours). The ellipsoidal polarizing plate was then examined. As a result, problems (such as separation, bubbles, wrinkles) were not observed.

(Preparation of liquid crystal display)

A liquid crystal display was prepared in the same manner as in Example 1, except that the above-prepared ellipsoidal polarizing plate was used.

Voltage was applied to the liquid crystal cell. A ratio of the transmittance (white of 2V per black of 5V) was measured as a contrast ratio. The upward, downward, leftward and rightward contrast ratios were measured. Further, 8 gradations were displayed at a voltage between 2V to 5V to determine an angle causing a reverse gradation. As a result, the viewing angles that can view an image having a contrast ratio of not smaller than 10 and causing no reverse gradation were 110° along upward and downward directions and 120° along leftward and rightward directions.

[Example 4]

(Surface treatment of transparent support)

The transparent support of the sheet (comprising the support and the optically anisotropic layer) prepared in Example 1 was irradiated with an ultraviolet ray at 115°C for 2 minutes. The light source was a cylinder crystal high pressure mercury lamp of 1 KW. The distance between the lamp and the transparent support was 10 cm, the width of the lamp was 50 cm, the arc length of the lamp was 30 cm, the main wavelength of the ultraviolet ray was 365 nm, and the amount of the exposure was 500 mJ/$cm^2$. Thus, the back side (on which the optically anisotropic layer was not provided) of the transparent support was subjected to the ultraviolet irradiation treatment.

(Preparation of ellipsoidal polarizing plate)

An ellipsoidal polarizing plate was prepared in the same manner as in Example 1, except that the above-treated sheet was used.

The prepared ellipsoidal polarizing plate was attached to a glass plate by using an acrylic adhesive, and subjected to an aging treatment at a high temperature under a high pressure. The plate was further placed in a thermostat of 90°C, and left for 500 hours. The ellipsoidal polarizing plate was then examined. As a result, problems (such as separation, bubbles, wrinkles) were not observed. The plate was furthermore placed in the thermostat of 90°C, and left

for 500 hours (total: 1,000 hours). The ellipsoidal polarizing plate was then examined. As a result, problems (such as separation, bubbles, wrinkles) were not observed.

(Preparation of liquid crystal display)

A liquid crystal display was prepared in the same manner as in Example 1, except that the above-prepared ellipsoidal polarizing plate was used.
Voltage was applied to the liquid crystal cell. A ratio of the transmittance (white of 2V per black of 5V) was measured as a contrast ratio. The upward, downward, leftward and rightward contrast ratios were measured. Further, 8 gradations were displayed at a voltage between 2V to 5V to determine an angle causing a reverse gradation. As a result, the viewing angles that can view an image having a contrast ratio of not smaller than 10 and causing no reverse gradation were 110° along upward and downward directions and 120° along leftward and rightward directions.

[Example 5]

(Preparation of transparent support)

With 45 weight parts of cellulose acetate (average acetic acid content: 60.9%), 1.35 weight parts of the retardation-increasing agent (4), 2.75 weight parts of triphenyl phosphate (plasticizer), 2.20 weight parts of biphenyl diphenyl phosphate, 232.72 weight parts of methylene chloride, 42.57 weight parts of methanol and 8.50 weight parts of n-butanol were mixed at room temperature to prepare a solution.
The obtained solution (dope) was cast on a band using a band casting machine (effective length: 6 m). The dry thickness of the formed film was 100 μm.
The Rth retardation value and the Re retardation value were measured by using an ellipsometer (M-150, Japan Spectrum Co., Ltd.) at the wavelength of 550 nm. The Rth retardation value was 240 nm, and the Re retardation value was 5 nm.

(Formation of orientation layer and optically anisotropic layer)

An orientation layer and an optically anisotropic layer were formed in the same manner as in Example 1, except that the above-prepared transparent support was used.

(Preparation of ellipsoidal polarizing plate)

An ellipsoidal polarizing plate was prepared in the same manner as in Example 1, except that the above-prepared lamination was used.

(Preparation of liquid crystal display)

A liquid crystal display was prepared in the same manner as in Example 1, except that the above-prepared ellipsoidal polarizing plate was used.
Voltage was applied to the liquid crystal cell. A ratio of the transmittance (white of 2V per black of 5V) was measured as a contrast ratio. The upward, downward, leftward and rightward contrast ratios were measured. Further, 8 gradations were displayed at a voltage between 2V to 5V to determine an angle causing a reverse gradation. As a result, the viewing angles that can view an image having a contrast ratio of not smaller than 10 and causing no reverse gradation were 110° along upward and downward directions and 120° along leftward and rightward directions.

[Example 6]

(Preparation of transparent support)

With 45 weight parts of cellulose acetate (average acetic acid content: 60.9%), 1.01 weight part of the retardation-increasing agent (4), 0.34 weight part of the retardation-increasing agent (95), 2.75 weight parts of triphenyl phosphate (plasticizer), 2.20 weight parts of biphenyl diphenyl phosphate, 232.72 weight parts of methylene chloride, 42.57 weight parts of methanol and 8.50 weight parts of n-butanol were mixed at room temperature to prepare a solution.
The obtained solution (dope) was cast on a band using a band casting machine (effective length: 6 m). The dry thickness of the formed film was 100 μm.
The Rth retardation value and the Re retardation value of the obtained film were measured by using an ellipsometer (M-150, Japan Spectrum Co., Ltd.) at the wavelength of 550 nm. The Rth retardation value was 240 nm, and the Re retardation value was 5 nm.

(Formation of orientation layer and optically anisotropic layer)

An orientation layer and an optically anisotropic layer were formed in the same manner as in Example 1, except that the above-prepared transparent support was used.

(Preparation of ellipsoidal polarizing plate)

An ellipsoidal polarizing plate was prepared in the same manner as in Example 1, except that the above-prepared lamination was used.

(Preparation of liquid crystal display)

A liquid crystal display was prepared in the same manner as in Example 1, except that the above-prepared ellipsoidal polarizing plate was used.

Voltage was applied to the liquid crystal cell. A ratio of the transmittance (white of 2V per black of 5V) was measured as a contrast ratio. The upward, downward, leftward and rightward contrast ratios were measured. Further, 8 gradations were displayed at a voltage between 2V to 5V to determine an angle causing a reverse gradation. As a result, the viewing angles that can view an image having a contrast ratio of not smaller than 10 and causing no reverse gradation were 110° along upward and downward directions and 120° along leftward and rightward directions.

[Example 7]

(Preparation of transparent support)

The following components were placed in a mixing tank, heated and stirred to dissolve components to prepare a cellulose ester solution.

| Cellulose ester solution | |
|---|---|
| Cellulose acetate (acetic acid content: 60.9%) | 100 weight parts |
| Triphenyl phosphate (plasticizer) | 7.8 weight parts |
| Biphenyldiphenyl phosphate (plasticizer) | 3.9 weight parts |
| Methylene chloride (first solvent) | 300 weight parts |
| Methanol (second solvent) | 54 weight parts |
| 1-Butanol (third solvent) | 11 weight parts |

The following components were placed in another mixing tank, heated and stirred to dissolve components to prepare a retardation-increasing agent solution.

| Retardation-increasing agent solution | |
|---|---|
| Retardation-increasing agent (4) | 12 weight parts |
| Retardation-increasing agent (95) | 4 weight parts |
| Methylene chloride | 80 weight parts |
| Methanol | 20 weight parts |

The cellulose ester solution (474 weight parts) and the retardation-increasing agent solution (22 weight parts)

were mixed and stirred well to prepare a dope. The prepared dope contained the two retardation-increasing agents in the amount of 3 weight parts based on 100 weight parts of cellulose acetate.

The dope was cast on a drum cooled at 0°C. The formed film containing 70 wt.% of the solvent was peeled from the drum. The both sides of the width direction in the film were fixed with pin tenters. The fixed film containing 3 to 5 wt.% of the solvent was dried while keeping such a distance that the stretching ratio along the width direction (cross direction to the machine direction) was 3%. The film was further dried while conveying the film between rolls in a thermal treatment machine. The stretching ratio along the machine direction was adjusted to essentially 0% (in consideration of 4% stretching ratio along the machine direction when the film is peeled from the drum) within a temperature range where the glass transition temperature is higher than 120°C. The stretching ratio of the width direction to the machine direction was adjusted to 0.75. Thus a cellulose acetate film (thickness: 107 μm) was prepared.

The Rth retardation value and the Re retardation value of the obtained cellulose acetate film (transparent support) were measured by using an ellipsometer (M-150, Japan Spectrum Co., Ltd.) at the wavelength of 550 nm. The Rth retardation value was 79 nm, and the Re retardation value was 10 nm.

(Formation of first undercoating layer)

The following coating solution was coated on the transparent support in an amount of 28 ml per $m^2$, and dried to form a first undercoating layer.

| Coating solution of first undercoating layer | |
|---|---|
| Gelatin | 5.42 weight parts |
| Formaldehyde | 1.36 weight part |
| Salicylic acid | 1.60 weight part |
| Acetone | 391 weight parts |
| Methanol | 158 weight parts |
| Methylene chloride | 406 weight parts |
| Water | 12 weight parts |

(Formation of second undercoating layer)

The following coating solution was coated on the first undercoating layer in an amount of 7 ml per $m^2$, and dried to form a second undercoating layer.

| Coating solution of second undercoating layer | |
|---|---|
| The following anionic polymer | 0.79 weight part |
| Half ethyl ester of citric acid | 10.1 weight parts |
| Acetone | 200 weight parts |
| Methanol | 877 weight parts |
| Water | 40.5 weight parts |

(Anionic polymer)

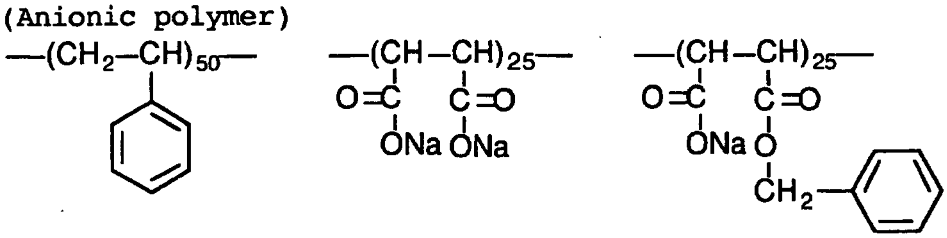

(Formation of backing layer)

The following coating solution was coated on the other side of the transparent support in an amount of 25 ml per $m^2$, and dried to form a backing layer.

| Coating solution of backing layer | |
|---|---|
| Cellulose diacetate (acetic acid content: 55%) | |
| | 6.56 weight parts |
| Silica matting agent (average particle size: 1 μm) | |
| | 0.65 weight part |
| Acetone | 679,weight parts |
| Methanol | 104 weight parts |

(Formation of orientation layer)

The aqueous solution of the denatured polyvinyl alcohol used in Example 1 was coated on the second undercoating layer, and air-dried at 80°C. The layer was subjected to a rubbing treatment to form an orientation layer.

(Formation of optically anisotropic layer)

In 3.43 g of methyl ethyl ketone, 1.8 g of the discotic liquid crystal compound used in Example 1, 0.2 g of trimethylolpropane triacrylate denatured with ethylene oxide (V#360, Osaka Organic Chemical Co., Ltd.), 0.04 g of cellulose acetate butyrate (CAB531-1.0, Eastman Chemical), 0.06 g of a photopolymerization initiator (Irgacure 907, Ciba-Geigy) and 0.02 g of a sensitizer (Kayacure DETX, Nippon Kayaku Co., Ltd.) were dissolved to prepare a coating solution. The coating solution was coated on the orientation layer by using a wire bar of #3. The sheet was adhered to a metal frame, and heated in a thermostat at 130°C for 2 minutes to align the discotic liquid crystal compound. The sheet was irradiated with an ultraviolet ray at 130°C for 1 minute by using a high pressure mercury lamp of 120 W/cm to polymerize the vinyl group of the discotic liquid crystal compound and to fix the alignment. The sheet was cooled to room temperature.

The thickness of the optically anisotropic layer was 1.0 μm. The retardation value of the lamination of the transparent support and the optically anisotropic layer was measured along the rubbing direction. The average inclined angle of the optic axis of the optically anisotropic layer was 15.5°. The Rth retardation value of the sheet was 139 nm. The Re retardation value of the sheet was 17 nm.

(Surface treatment of transparent support)

The lamination of the transparent support and the optically anisotropic layer was immersed in 1.5 N aqueous solution of sodium hydroxide at 55°C for 2 minutes. The sheet was washed with water in a bath at the room temperature. The sheet was neutralized with 0.1 N of sulfuric acid at 30°C. The sheet was again washed with water in a bath at the room temperature. The sheet was air-dried at 100°C. Thus, the back side (on which the optically anisotropic layer was not provided) of the transparent support was subjected to the saponification treatment.

(Preparation of ellipsoidal polarizing plate)

A polyvinyl alcohol film was stretched and treated to adsorb iodine to prepare a polarizing membrane. The transparent support of the sheet (comprising the support and the optical anisotropic layer) was attached to one side of the polarizing membrane by using a polyvinyl alcohol adhesive. A transparent protective film (Fuji TAC TD80U, Fuji Photo Film Co., Ltd.) was attached to the other side of the membrane by using a polyvinyl alcohol adhesive. The light absorbing axis of the polarizing membrane was parallel to the rubbing direction of the optically anisotropic layer. As a result, a direction obtained by projecting on a film plane an average direction of the symmetrical molecular axes of the discotic liquid crystal compounds (which mean normal lines of the discotic planes of the triphenylene rings) was parallel to the light absorbing axis of the polarizing membrane. Thus an ellipsoidal polarizing plate was prepared.

The ellipsoidal polarizing plate was attached to a glass plate by using an acrylic adhesive, and subjected to an aging treatment at a high temperature under a high pressure. The plate was further placed in a thermostat of 90°C, and left for 500 hours. The ellipsoidal polarizing plate was then examined. As a result, problems (such as separation, bubbles,

wrinkles) were not observed. The plate was furthermore placed in the thermostat of 90°C, and left for 500 hours (total: 1,000 hours). The ellipsoidal polarizing plate was then examined. As a result, problems (such as separation, bubbles, wrinkles) were not observed.

(Preparation of liquid crystal display)

A liquid crystal display was prepared in the same manner as in Example 1, except that the above-prepared ellipsoidal polarizing plate was used.

Voltage was applied to the liquid crystal cell. A ratio of the transmittance (white of 2V per black of 5V) was measured as a contrast ratio. The upward, downward, leftward and rightward contrast ratios were measured. Further, 8 gradations were displayed at a voltage between 2V to 5V to determine an angle causing a reverse gradation. As a result, the viewing angles that can view an image having a contrast ratio of not smaller than 10 and causing no reverse gradation were 110° along upward and downward directions and 120° along leftward and rightward directions.

[Example 8]

(Preparation of transparent support to formation of orientation layer)

The transparent support was prepared, and the first undercoating layer, the second undercoating layer, the backing layer and the orientation layer were formed in the same manner as in Example 7.

(Formation of optically anisotropic layer)

In 3.43 g of methyl ethyl ketone, 1.8 g of the discotic liquid crystal compound used in Example 1, 0.2 g of trimethylolpropane triacrylate denatured with ethylene oxide (V#360, Osaka Organic Chemical Co., Ltd.), 0.04 g of cellulose acetate butyrate (CAB531-1.0, Eastman Chemical), 0.06 g of a photopolymerization initiator (Irgacure 907, Ciba-Geigy) and 0.02 g of a sensitizer (Kayacure DETX, Nippon Kayaku Co., Ltd.) were dissolved to prepare a coating solution. The coating solution was coated on the orientation layer by using a wire bar of #3.6. The sheet was adhered to a metal frame, and heated in a thermostat at 130°C for 2 minutes to align the discotic liquid crystal compound. The sheet was cooled to 100°C, and irradiated with an ultraviolet ray for 1 minute by using a high-pressure mercury lamp of 120 W/cm to polymerize the vinyl group of the discotic liquid crystal compound and to fix the alignment.

The sheet was cooled to room temperature.

The thickness of the optically anisotropic layer was 1.2 μm. The retardation value of the lamination of the transparent support and the optically anisotropic layer was measured along the rubbing direction. The average inclined angle of the optic axis of the optically anisotropic layer was 18°. The Rth retardation value of the sheet was 160 nm. The Re retardation value of the sheet was 35 nm.

(Surface treatment of transparent support)

The lamination of the transparent support and the optically anisotropic layer was immersed in 1.5 N aqueous solution of sodium hydroxide at 55°C for 2 minutes. The sheet was washed with water in a bath at the room temperature. The sheet was neutralized with 0.1 N of sulfuric acid at 30°C. The sheet was again washed with water in a bath at the room temperature. The sheet was air-dried at 100°C. Thus, the back side (on which the optically anisotropic layer was not provided) of the transparent support was subjected to the saponification treatment.

(Preparation of ellipsoidal polarizing plate)

A polyvinyl alcohol film was stretched and treated to adsorb iodine to prepare a polarizing membrane. The transparent support of the sheet (comprising the support and the optical anisotropic layer) was attached to one side of the polarizing membrane by using a polyvinyl alcohol adhesive. A transparent protective film (Fuji TAC TD80U, Fuji Photo Film Co., Ltd.) was attached to the other side of the membrane by using a polyvinyl alcohol adhesive. The light-absorbing axis of the polarizing membrane was parallel to the rubbing direction of the optically anisotropic layer. As a result, a direction obtained by projecting on a film plane an average direction of the symmetrical molecular axes of the discotic liquid crystal compounds (which mean normal lines of the discotic planes of the triphenylene rings) was parallel to the light-absorbing axis of the polarizing membrane. Thus an ellipsoidal polarizing plate was prepared.

The ellipsoidal polarizing plate was attached to a glass plate by using an acrylic adhesive, and subjected to an aging treatment at a high temperature under a high pressure. The plate was further placed in a thermostat of 90°C, and left for 500 hours. The ellipsoidal polarizing plate was then examined. As a result, problems (such as separation, bubbles,

wrinkles) were not observed. The plate was furthermore placed in the thermostat of 90°C, and left for 500 hours (total: 1,000 hours). The ellipsoidal polarizing plate was then examined. As a result, problems (such as separation, bubbles, wrinkles) were not observed.

(Preparation of liquid crystal display)

A liquid crystal display was prepared in the same manner as in Example 1, except that the above-prepared ellipsoidal polarizing plate was used.

Voltage was applied to the liquid crystal cell. A ratio of the transmittance (white of 2V per black of 5V) was measured as a contrast ratio. The upward, downward, leftward and rightward contrast ratios were measured. Further, 8 gradations were displayed at a voltage between 2V to 5V to determine an angle causing a reverse gradation. As a result, the viewing angles that can view an image having a contrast ratio of not smaller than 10 and causing no reverse gradation were 125° along upward and downward directions and 160° along leftward and rightward directions.

## Claims

1. An ellipsoidal polarizing plate comprising a transparent protective membrane (1a, 1b), a polarizing membrane (2a, 2b), a transparent support (3a, 3b) and an optically anisotropic layer (4a, 4b) formed from liquid crystal molecules in this order, wherein the transparent support (3a, 3b) is made of a cellulose ester film having an Rth retardation value defined by the following formula in the range of 70 to 400 nm:

$$Rth = \{(nx+ny)/2-nz\}xd$$

wherein nx is a refractive index measured at the wavelength of 550 nm along an x direction of the film in plane; ny is a refractive index measured at the wavelength of 550 nm along a y direction of the film in plane; nz is a refractive index measured at the wavelength of 550 nm along a vertical direction to the film plane; and d is a thickness of the film, and wherein the transparent support (3a, 3b) has a surface on which the polarizing membrane (2a, 2b) is provided, said surface being subjected to a surface treatment selected from the group consisting of a corona discharge treatment, a glow discharge treatment, a flame treatment, an acid treatment, an alkali treatment and an ultraviolet irradiation treatment; and
wherein the cellulose ester film contains a compound having at least two aromatic rings in an amount of 0.3 to 20 weight parts based on 100 weight parts of cellulose ester.

2. An ellipsoidal polarizing plate according to Claim 1, wherein the cellulose ester film comprises cellulose acetate.

3. An ellipsoidal polarizing plate according to Claim 2, wherein the cellulose acetate has an acetic acid content in the range of 58.0 to 62.5%.

4. An ellipsoidal polarizing plate according to Claim 1, wherein the compound having at least two aromatic rings has a molecular structure that does not cause a steric hindrance of configuration between the two aromatic rings.

5. An ellipsoidal polarizing plate according to Claim 1, wherein the cellulose ester film has a thickness in the range of 40 to 120 μm.

6. An ellipsoidal polarizing plate according to Claim 1, wherein the cellulose ester film is formed by the solvent casting method.

7. An ellipsoidal polarizing plate according to Claim 1, wherein the surface of the transparent support (3a, 3b) made of the cellulose ester film on which the polarizing membrane (2a, 2b) is provided is subjected to a saponification treatment by an acid treatment or an alkali treatment.

8. An ellipsoidal polarizing plate according to Claim 1, wherein the cellulose ester film is obtainable by solvent casting a solution of cellulose ester formed by the cooling dissolution method in which a mixture of an organic solvent and 10 to 40 wt% of cellulose ester, based on the amount of the mixture, is cooled to a temperature of -100 to -10°C to solidify it and then the mixture is warmed to a temperature of 0 to 200°C to dissolve the cellulose ester in the solvent.

9. A liquid crystal display of transmission type comprising a liquid crystal cell and two polarizing elements provided on both sides of the cell, wherein at least one of the two polarizing elements is an ellipsoidal polarizing plate as defined in any preceding claim.

10. A liquid crystal display as defined in Claim 9, wherein the liquid crystal cell is TN mode.

## Patentansprüche

1. Ellipsoide Polarisationsplatte, die eine transparente Schutzmembran (1a, 1b), eine Polarisationsmembran (2a, 2b), einen transparenten Träger (3a, 3b) und eine optisch anisotrope Schicht (4a, 4b), die aus Flüssigkristallmolekülen gebildet ist, in dieser Reihenfolge umfasst, worin der transparente Träger (3a, 3b) aus einem Zelluloseesterfilm hergestellt ist, der einen Rth-Verzögerungswert im Bereich von 70 bis 400 nm aufweist und durch die folgende Formel definiert ist:

$$Rth = \{(nx+ny)/2-nz\} \times d,$$

worin nx ein bei der Wellenlänge von 550 nm gemessener Brechungsindex entlang einer x-Richtung der Filmebene ist; ny ein bei der Wellenlänge von 550 nm gemessener Brechungsindex entlang einer y-Richtung der Filmebene ist; nz ein bei der Wellenlänge von 550 nm gemessener Brechungsindex entlang einer vertikalen Richtung zur Filmebene ist; und d eine Dicke des Films ist und
worin der transparente Träger (3a, 3b) eine Oberfläche aufweist, auf der die Polarisationsmembran (2a, 2b) bereitgestellt ist, wobei diese Oberfläche einer Oberflächenbehandlung unterzogen ist, die ausgewählt ist aus einer Korona-Entladungsbehandlung, einer Glimm-Entladungsbehandlung, einer Flammenbehandlung, einer Säurebehandlung, einer Alkalibehandlung und einer UV-Strahlungsbehandlung; und
worin der Zelluloseesterfilm eine Verbindung enthält, die mindestens zwei aromatische Ringe in einer Menge von 0,3 bis 20 Gew.-Teile, bezogen auf 100 Gew.-Teile des Zelluloseesters aufweist.

2. Ellipsoide Polarisationsplatte gemäß Anspruch 1, worin der Zelluoseesterfilm Zelluloseacetat umfasst.

3. Ellipsoide Polarisationsplatte gemäß Anspruch 2, worin das Zelluloseacetat einen Essigsäuregehalt im Bereich von 58,0 bis 62,5 % aufweist.

4. Ellipsoide Polarisationsplatte gemäß Anspruch 1, worin die Verbindung, die mindestens zwei aromatische Ringe aufweist, eine Molekülstruktur aufweist, die eine sterische Hinderung der Konfiguration zwischen den zwei aromatischen Ringen verursacht.

5. Ellipsoide Polarisationsplatte gemäß Anspruch 1, worin der Zelluloseesterfilm eine Dicke im Bereich von 40 bis 120 μm aufweist.

6. Ellipsoide Polarisationsplatte gemäß Anspruch 1, worin der Zelluloseesterfilm durch das Lösungsmittelgießverfahren gebildet ist.

7. Ellipsoide Polarisationsplatte gemäß Anspruch 1, worin die Oberfläche des transparenten Trägers (3a, 3b) **dadurch** hergestellt ist, dass der Zelluloseesterfilm, auf dem die Polymerisationsmembran (2a, 2b) bereitgestellt ist, einer Verseifungsbehandlung durch eine Säurebehandlung oder eine Alkalibehandlung unterzogen ist.

8. Ellipsoide Polarisationsplatte gemäß Anspruch 1, worin der Zelluloseesterfilm durch Lösungsmittelgießen einer Lösung aus Zelluloseester erhältlich ist, der durch das Kältelösungsverfahren gebildet ist, bei dem eine Mischung eines organischen Lösungsmittels und 10 bis 40 Gew.% des Zelluloseesters, bezogen auf die Menge der Mischung, auf eine Temperatur von -100 bis -10°C gekühlt wird, um sie zu verfestigen, und anschließend die Mischung auf eine Temperatur von 0 bis 200°C erwärmt wird, um den Zelluloseester in dem Lösungsmittel zu lösen.

9. Flüssigkristalldisplay des Transmissionstyps, welches eine Flüssigkristallzelle und zwei Polarisationselemente auf beiden Seiten der Zelle umfasst, worin mindestens eines der zwei Polarisationselemente eine ellipsoide Polarisationsplatte gemäß irgendeinem der vorangehenden Ansprüche ist.

**10.** Flüssigkristalldisplay gemäß Anspruch 9, worin die Flüssigkristallzelle eine TN-Mode-Zelle ist.

**Revendications**

**1.** Plaque de polarisation ellipsoïde comprenant une membrane protectrice transparente (1a, 1b), une membrane de polarisation (2a, 2b), un support transparent (3a, 3b) et une couche à anisotropie optique (4a, 4b) formée de molécules à cristaux liquides, dans cet ordre, dans laquelle le support transparent (3a, 3b) est fait d'un film d'ester de cellulose ayant une valeur de retardement Rth définie par la formule suivante dans la plage de 70 à 400 nm :

$$Rth = \{(nx+ny)/2-nz\} \times d$$

dans laquelle nx est un indice de réfraction mesuré à la longueur d'onde de 550 nm le long d'une direction x du film dans un plan ; ny est un indice de réfraction mesuré à la longueur d'onde de 550 nm le long d'une direction y du film dans un plan ; nz est un indice de réfraction mesuré à la longueur d'onde de 550 nm le long d'une direction verticale par rapport au plan du film ; et d est une épaisseur du film, et dans lequel le support transparent (3a, 3b) a une surface sur laquelle la membrane de polarisation (2a, 2b) est disposée, ladite surface étant soumise à un traitement de surface sélectionné à partir du groupe consistant en un traitement par décharge par effet corona, un traitement par décharge luminescente, un traitement à la flamme, un traitement à l'acide, un traitement à l'alcali et un traitement par rayonnement ultraviolet ; et
dans lequel le film d'ester de cellulose contient un composé ayant au moins deux noyaux aromatiques en une quantité de 0,3 à 20 parties en poids sur base de 100 parties en poids d'ester de cellulose.

**2.** Plaque de polarisation ellipsoïde selon la revendication 1, dans laquelle le film d'ester de cellulose comprend de l'acétate de cellulose.

**3.** Plaque de polarisation ellipsoïde selon la revendication 2, dans laquelle l'acétate de cellulose a une teneur en acide acétique dans la plage de 58,0 à 62,5 %.

**4.** Plaque de polarisation ellipsoïde selon la revendication 1, dans laquelle le composé ayant au moins deux noyaux aromatiques a une structure moléculaire qui ne provoque pas d'empêchement stérique de configuration entre les deux noyaux aromatiques.

**5.** Plaque de polarisation ellipsoïde selon la revendication 1, dans laquelle le film d'ester de cellulose a une épaisseur dans la plage de 40 à 120 μm.

**6.** Plaque de polarisation ellipsoïde selon la revendication 1, dans laquelle le film d'ester de cellulose est formé par le procédé de formage au solvant.

**7.** Plaque de polarisation ellipsoïde selon la revendication 1, dans laquelle la surface du support transparent (3a, 3b) fait du film d'ester de cellulose sur laquelle la membrane de polarisation (2a, 2b est disposée), est soumise à un traitement de saponification par un traitement à l'acide ou un traitement à l'alcali.

**8.** Plaque de polarisation ellipsoïde selon la revendication 1, dans laquelle le film d'ester de cellulose peut être obtenu par formage au solvant d'une solution d'ester de cellulose formée par le procédé de dissolution par refroidissement dans lequel un mélange d'un solvant organique et de 10 à 40 % en poids d'ester de cellulose, sur base de la quantité du mélange, est refroidi à une température de -100 à -10 °C pour le solidifier et ensuite le mélange est réchauffé à une température de 0 à 200 °C pour dissoudre l'ester de cellulose dans le solvant.

**9.** Afficheur à cristaux liquides de type à transmission comprenant une cellule à cristaux liquides et deux éléments de polarisation disposés des deux côtés de la cellule, dans lequel au moins un des deux éléments de polarisation est une plaque de polarisation ellipsoïde selon l'une quelconque des revendications précédentes.

**10.** Afficheur à cristaux liquides selon la revendication 9, dans lequel la cellule à cristaux liquides est en mode TN.

FIG. 1

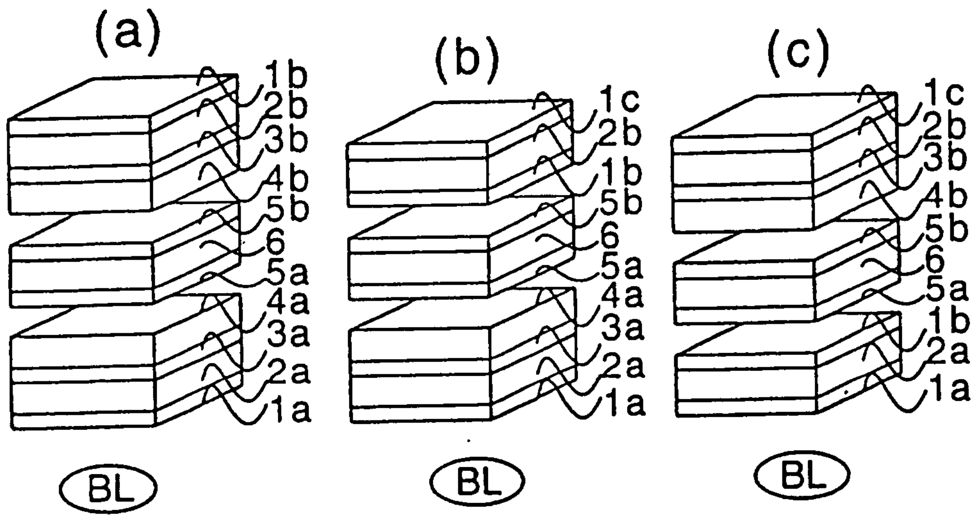
(a)
(b)
(c)
1b
2b
3b
4b
5b
6
5a
4a
3a
2a
1a
1c
2b
1b
5b
6
5a
4a
3a
2a
1a
1c
2b
3b
4b
5b
6
5a
1b
2a
1a
BL
BL
BL

FIG. 2

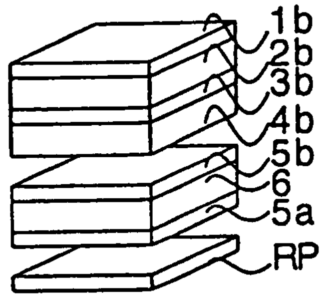
1b
2b
3b
4b
5b
6
5a
RP

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6214116 A
- US 5583679 A
- US 5646703 A
- DE 3922620 A1
- JP 10054982 A
- US 5805253 A
- WO 9637804 A
- JP 9026572 A
- JP 2866372 B
- JP 7191217 A
- JP 8021996 A
- JP 8094838 A
- EP 0864906 A
- US 2336310 A
- US 2367603 A
- US 2492078 A
- US 2492977 A
- US 2492978 A
- US 2607704 A
- US 2739069 A
- US 2739070 A
- GB 640731 A
- GB 736892 A
- JP 451970 A
- JP 45544919745614 B
- JP 60176834 A
- JP 60203430 A
- JP 62115035 A
- JP 5017844 A
- JP 3199201 A
- JP S1993197073 B
- JP 5194789 A
- JP 5271471 A
- JP 619941078454 B
- JP 7011056 A
- JP 8338913 A
- JP 5053016 A
- JP 8027284 A
- US 2367661 A
- US 2367670 A
- US 2448828 A
- US 2722512 A
- US 2951758 A
- US 3046127 A
- US 3549367 A
- JP 60105667 A
- US 4239850 A
- US 4212970 A


### Non-patent literature cited in the description


- **C. Destrade et al.** *Mol. Crysr. Liq. Cryst.,* 1981, vol. 71, 111
- Japan Chemical Society, Quarterly Chemical Review. 1994
- **B. Kohne et al.** *Angew. Chem. Soc. Chem. Comm.,* 1985, 1794
- **J. Zhang et al.** *J. Am. Chem. Soc.,* 1994, vol. 116, 2655